# EUROPEAN PATENT APPLICATION

(11) **EP 4 008 746 A1**
(43) Date of publication of application: **08.06.2022**
(21) Application number: 20850388.8
(22) Date of filing: 25.05.2020
(51) Int. Cl.: C08J 5/24, C08L 63/00

(54) **METHOD FOR PRODUCING PREPREG, AND PREPREG**

(30) Priority: 02.08.2019 JP 2019142841
(71) Applicant: ENEOS Corporation, Chiyoda-ku Tokyo 100-8162 (JP)
(72) Inventor: MATSUMOTO, Takayuki, Tokyo 100-8162 (JP); FUKUDA, Yoshihiro, Tokyo 100-8162 (JP)
(74) Representative: Grünecker Patent- und Rechtsanwälte PartG mbB
(86) International application number: PCT/JP2020/020587
(87) International publication number: WO 2021/024576

(57) **Abstract**

Disclosed is a method for producing a prepreg, the prepreg having: a reinforcing fiber layer including reinforcing fibers and a resin composition containing component (A), component (B), and component (C), the reinforcing fibers being impregnated with the resin composition in between the fibers; and a surface fiber layer provided on the surface of the reinforcing fiber layer and including a fabric including polyamide fibers and a resin composition containing component (A), component (B), and component (C), the polyamide fibers being impregnated with the resin composition in between the fibers. The method for producing a prepreg includes a disposition step of disposing the fabric on the surface of a reinforcing fiber base material and an impregnation step of supplying a resin composition to the reinforcing fiber base material and impregnating the reinforcing fibers with the resin composition in between the fibers. The polyamide fibers include a first polyamide resin and a second polyamide resin having a melting point higher than the melting point of the first polyamide resin by 7°C to 50°C.

## Description

### Technical Field

The present invention relates to a method for producing a prepreg, and a prepreg. More particularly, the present invention relates to a method for producing a prepreg that is utilized in order to obtain a fiber-reinforced composite material for use in aircraft applications, watercraft applications, automobile applications, sports applications, and other general industrial applications, and to a prepreg.

### Background Art

Fiber-reinforced composite materials that are obtained by laminating a plurality of prepregs formed from various fibers and matrix resins, are widely used for aircraft, watercraft, automobiles, sports goods, and other general industrial applications, due to the excellent mechanical properties of the composite materials. In recent years, the range of application of fiber-reinforced composite materials has been broadening more and more as the use experience is gained.

As such a fiber-reinforced composite material, composite materials that utilize benzoxazine resins have been proposed in, for example, Patent Literatures 1 and 2. Benzoxazine resins have excellent moisture resistance and heat resistance but have a problem of inferior toughness, and it has been devised to compensate for the drawbacks by mixing an epoxy resin, various fine resin particles, and the like into the resin.

### Citation List

### Patent Literature

Patent Literature 1: Japanese Unexamined Patent Publication No. 2007-16121
Patent Literature 2: Japanese Unexamined Patent Publication No. 2010-13636

### Summary of Invention

### Technical Problem

However, further weight reduction is desired for fiber-reinforced composite materials for use in aircraft applications. In order to reduce the weight of a material, it is necessary to achieve, in particular, a high level of Compression-After-Impact strength (hereinafter, may be referred to as CAI strength) among the mechanical properties required for use in aircraft applications. In addition, fiber-reinforced composite materials are required to have little variation in the CAI strength. This is because when the CAI strength of a fiber-reinforced composite material has large variation, stress is concentrated at a site where the CAI strength is relatively low at the time of impact application, and there is a risk of the occurrence of a problem that there may be local damage, or damage may spread from the site where the CAI strength is relatively low as a starting point. Furthermore, in a case where a plurality of fiber-reinforced composite materials are produced, when the CAI strength between each of the fiber-reinforced composite materials has large variation, defective products that do not satisfy the required standard value of the CAI strength are likely to be generated, and also, even if the standard value is satisfied, there is a problem that in the case of using a plurality of fiber-reinforced composite materials with varying CAI strengths for the same use application, the product quality of the obtained target products is not stable. Therefore, fiber-reinforced composite materials are required not only to have excellent CAI strength but also to have little variation in the CAI strength. However, in the examples specifically described in the above-described patent literatures, it cannot always be said that excellent CAI strength and reduction of variation in the CAI strength are achieved at a high level at the same time.

The present invention was achieved in view of the above-described problems of the related art technologies, and it is an object of the present invention to provide a method for producing a prepreg, with which a fiber-reinforced composite material that achieves excellent CAI strength and a reduction of variation in the CAI strength are achieved at a high level at the same time while utilizing a benzoxazine resin having excellent moisture resistance and heat resistance, and a prepreg.

### Solution to Problem

In order to solve the above-described problems, the present invention provides a method for producing a prepreg, the prepreg having a reinforcing fiber layer including reinforcing fibers and a resin composition containing: (A) a benzoxazine resin, (B) an epoxy resin, and (C) a curing agent having two or more phenolic hydroxyl groups in the molecule, the reinforcing fibers being impregnated with the resin composition in between the fibers; and a surface fiber layer provided on at least one surface of the reinforcing fiber layer and including a fabric including polyamide fibers and a resin composition containing the component (A), the component (B), and the component (C), the polyamide fibers being impregnated with the resin composition in between the fibers, the method comprising a disposition step of disposing the fabric on at least one surface of a reinforcing fiber base material including reinforcing fibers; and before or after the disposition step or simultaneously with the disposition step, an impregnation step of supplying a resin composition containing the component (A), the component (B), and the component (C) to the reinforcing fiber base material and impregnating the reinforcing fibers with the resin composition in between the fibers, wherein the polyamide fibers including a first polyamide resin and a second polyamide resin having a melting point higher than the melting point of the first polyamide resin by 7°C to 50°C.

A fiber-reinforced composite material can be obtained by laminating a plurality of prepregs obtained by the production method of the present invention and heating the laminate under pressure. While utilizing a benzoxazine resin having excellent moisture resistance and heat resistance, this fiber-reinforced composite material can achieve excellent CAI strength and a reduction of variation in the CAI strength at a high level at the same time. This fiber-reinforced composite material can promote weight reduction and thickness reduction of the material due to the above-described excellent physical properties. Furthermore, this fiber-reinforced composite material can achieve ILSS and interlaminar fracture toughness at a high level, reduce the damaged area after impact application, and promote reduction of variation in these.

The present invention also provides a prepreg comprising a reinforcing fiber layer including reinforcing fibers and a resin composition containing (A) a benzoxazine resin, (B) an epoxy resin, and (C) a curing agent having two or more phenolic hydroxyl groups in the molecule, the reinforcing fibers being impregnated with the resin composition in between the fibers; and a surface fiber layer provided on at least one surface of the reinforcing fiber layer and including a fabric including polyamide fibers and a resin composition containing the component (A), the component (B), and the component (C), the polyamide fibers being impregnated with the resin composition in between the fibers, wherein the polyamide fibers include a first polyamide resin and a second polyamide resin having a melting point higher than the melting point of the first polyamide resin by 7°C to 50°C.

According to the prepreg of the present invention, a fiber-reinforced composite material in which excellent CAI strength and a reduction of variation in the CAI strength are achieved at a high level at the same time, while a benzoxazine resin having excellent moisture resistance and heat resistance is utilized, can be obtained by laminating a plurality of the prepreg thus obtained and heating the laminate under pressure. This fiber-reinforced composite material can promote weight reduction and thickness reduction of the material due to the above-described excellent physical properties. In addition, this fiber-reinforced composite material can achieve ILSS and interlaminar fracture toughness at a high level, reduce the damaged area after impact application, and promote reduction of variation in these.

With regard to the fact that a fiber-reinforced composite material in which the CAI strength and reduction of variation in the CAI strength are achieved at a high level at the same time can be obtained by laminating a plurality of prepregs obtained by the above-described method for producing a prepreg, and heating the laminate under pressure, the inventors consider as follows. That is, by using a fabric including polyamide fibers as a polyamide resin, the polyamide resin is uniformly distributed within the plane of the prepreg, as compared to the case of using polyamide resin particles as the polyamide resin. It is speculated that since the polyamide resin is not locally densely packed, the polyamide resin uniformly infiltrates into the reinforcing fiber layer, and as a result, a fiber-reinforced composite material that has achieved reduction of variation in the CAI strength at a high level can be obtained.

The fusion temperature of polyamide fibers is decreased in the presence of a compound having a phenolic hydroxyl group, which is a curing agent for a benzoxazine resin. Then, when the fusion temperature of the polyamide fibers becomes too low, at the time of curing of a thermosetting resin when a fiber-reinforced composite material is produced using a prepreg, the polyamide fibers are likely to fuse excessively, and thereby fused polyamide fibers are likely to infiltrate excessively into the reinforcing fiber layer. In contrast, it is speculated that by using polyamide fibers including the above-described specific two kinds of polyamide resins, one of the polyamide resins can be fused appropriately in a state in which the other polyamide resin cannot easily flow under the temperature conditions of curing the resin composition, and as a result, a resin-cured layer having excellent adhesiveness and peel resistance is formed between fiber layers.

Furthermore, in the case of using a fabric including polyamide fibers as a polyamide resin, further weight reduction and thickness reduction of the fiber-reinforced composite material can be promoted as compared to the case of using polyamide resin particles as the polyamide resin. This is because in the case of using polyamide resin particles, the film thickness of the resin film used at the time of producing a prepreg by a hot melt method is limited by the particle size of the resin particles.

Furthermore, in the case of using a fabric including polyamide fibers as the polyamide resin, a fiber-reinforced composite material having further enhanced ILSS and interlaminar fracture toughness can be obtained as compared to the case of using polyamide resin particles as the polyamide resin. Regarding the reason for this, the inventors speculate that it is because in the case of using a fabric including polyamide fibers, it is necessary to cut the polyamide fibers at the time of interlaminar shear and at the time of interlaminar fracture.

### Advantageous Effects of Invention

According to the present invention, a method for producing a prepreg, with which a fiber-reinforced composite material that has achieved excellent CAI strength and a reduction of variation in the CAI strength at a high level at the same time, while utilizing a benzoxazine resin having excellent moisture resistance and heat resistance, and a prepreg can be provided.

A prepreg obtained by the production method of the present invention and a fiber-reinforced composite material obtained by laminating a plurality of the prepregs of the present invention and heating the laminate under pressure can be suitably utilized for use in aircraft applications, watercraft applications, automobile applications, sports applications, and other general industrial applications and are particularly useful for aircraft applications.

### Brief Description of Drawings

FIG. 1 is a schematic cross-sectional view for describing a prepreg according to the present invention.
FIG. 2 is a schematic diagram showing an example of the curing profile for a method for producing a fiber-reinforced composite material according to the present invention.
FIG. 3 is a schematic cross-sectional view for describing a fiber-reinforced composite material according to the present invention.
FIG. 4 is a photograph of a fabric used in Example 1.
FIG. 5 is a photograph of a fabric used in Example 2.
FIG. 6 is photographs of the surfaces of fiber-reinforced composite materials obtained in Example 1, Example 2, and Comparative Example 5.
FIG. 7 is photographs of cross-sections of the fiber-reinforced composite materials obtained in Example 1, Example 2, and Comparative Example 5.

### Description of Embodiments

The present invention will be described in detail below.

According to the present specification, the melting point of a polyamide resin is a value determined by raising the temperature from 25°C at a rate of 10°C/min using a differential scanning calorimeter (DSC) and measuring the temperature at the top of an endotherm peak thus obtained. Furthermore, the fusion temperature of a polyamide resin measured in the composition constituting the surface fiber layer refers to the temperature at the top of an endotherm peak obtained by raising the temperature of a composition constituting the surface fiber layer including a polyamide resin from 25°C at a rate of 10°C/min using a differential scanning calorimeter (DSC).

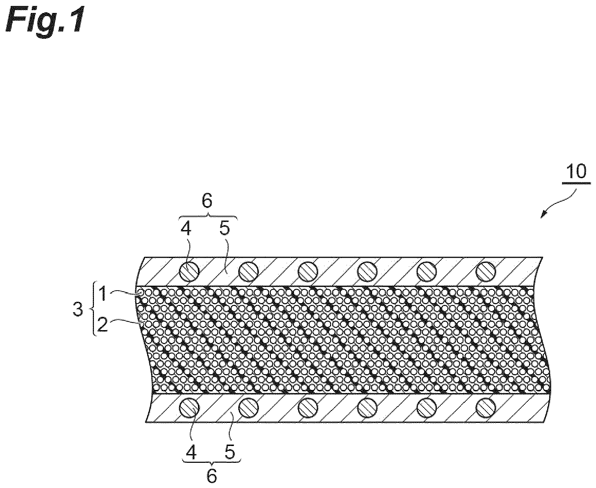

FIG. 1 is a schematic cross-sectional view for describing a prepreg according to the present invention. The prepreg 10 shown in FIG. 1 comprises a reinforcing fiber layer 3 including reinforcing fibers 1 and a resin composition 2, the reinforcing fibers 1 being impregnated with the resin composition 2 in between the fibers; and a surface fiber layer 6 provided on the surface of the reinforcing fiber layer 3 and containing a fabric 4 including polyamide fibers and a resin composition 5. In the surface fiber layer 6 of the prepreg 10, the fabric 4 including polyamide fibers is included in a layer of the resin composition 5. In the prepreg 10 shown in FIG. 1, the surface fiber layer 6 is provided on both surfaces of the reinforcing fiber layer 3; however, it is also acceptable that the surface fiber layer 6 is provided on only one surface of the reinforcing fiber layer 3. In the prepreg 10 shown in FIG. 1, the entirety of the fabric 4 including polyamide fibers is included in a layer of the resin composition 5; however, a portion of the fabric 4 including polyamide fibers may be included in a layer of the resin composition 5.

The reinforcing fiber layer 3 in the prepreg 10 according to the present embodiment includes a resin composition 2 containing: (A) a benzoxazine resin, (B) an epoxy resin, and (C) a curing agent having two or more phenolic hydroxyl groups in the molecule.

The surface fiber layer 6 in the prepreg 10 according to the present embodiment includes a resin composition 5 containing (A) a benzoxazine resin, (B) an epoxy resin, and (C) a curing agent having two or more phenolic hydroxyl groups in the molecule.

As the (A) benzoxazine resin (hereinafter, may be referred to as component (A)) used in the present invention, a compound having a benzoxazine ring represented by the following General Formula (A-1) may be mentioned. 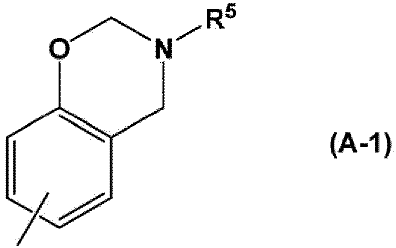 wherein in Formula (A-1), R⁵ represents a chain-like alkyl group having 1 to 12 carbon atoms, a cyclic alkyl group having 3 to 8 carbon atoms, an aryl group having 6 to 14 carbon atoms, or an aryl group substituted with a chain-like alkyl group having 1 to 12 carbon atoms or with a halogen; and the linking bond may have a hydrogen atom bonded thereto.

Examples of the chain-like alkyl group having 1 to 12 carbon atoms include a methyl group, an ethyl group, a propyl group, an isopropyl group, an n-butyl group, an isobutyl group, and a t-butyl group. Examples of the cyclic alkyl group having 3 to 8 carbon atoms include a cyclopentyl group and a cyclohexyl group. Examples of the aryl group having 6 to 14 carbon atoms include a phenyl group, a 1-naphthyl group, a 2-naphthyl group, a phenanthryl group, and a biphenyl group. Examples of the aryl group substituted with a chain-like alkyl group having 1 to 12 carbon atoms or with a halogen include an o-tolyl group, an m-tolyl group, a p-tolyl group, a xylyl group, an o-ethylphenyl group, an m-ethylphenyl group, a p-ethylphenyl group, an o-t-butylphenyl group, an m-t-butylphenyl group, a p-t-butylphenyl group, an o-chlorophenyl group, and an o-bromophenyl group.

Among the above-described examples, R⁵ may be a methyl group, an ethyl group, a propyl group, a phenyl group, or an o-methylphenyl group, from the viewpoint of providing satisfactory handleability.

Furthermore, a compound having a benzoxazine ring represented by the following General Formula (A-2) may be mentioned. 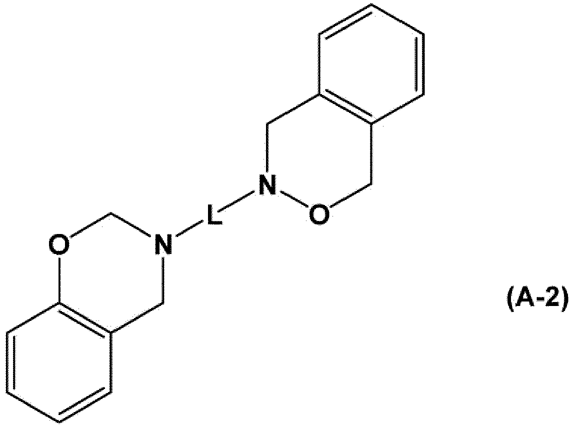 wherein in Formula (A-2), L represents an alkylene group or an arylene group.

Regarding the benzoxazine resin of the component (A), for example, monomers represented by the following formulae, oligomers in which several molecules of the monomers are polymerized, and a reaction product between at least one of the monomers represented by the following formulae and a compound having a benzoxazine ring having a structure different from these monomers may be preferably mentioned.

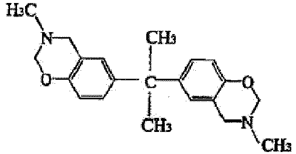

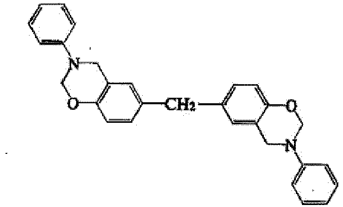

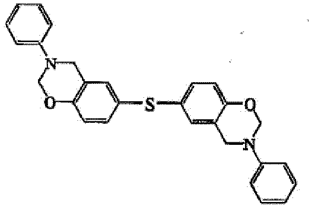

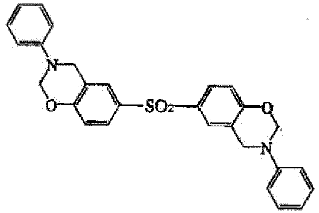

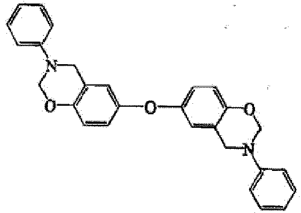

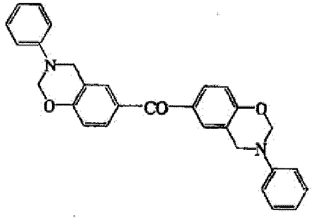

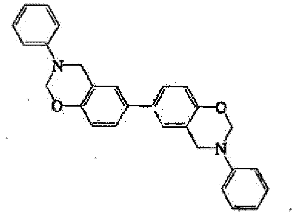

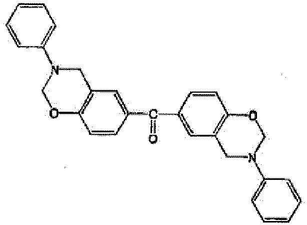

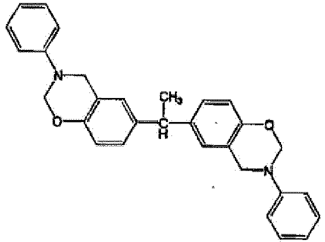

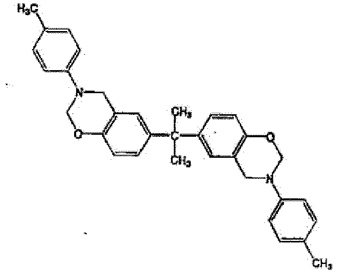

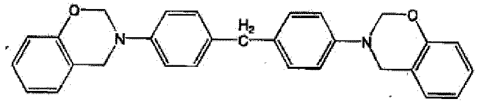

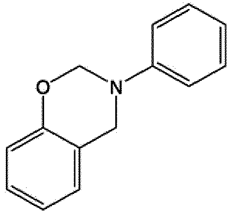

The component (A) has excellent flame retardancy because the benzoxazine ring produces a skeleton similar to that of a phenol resin when subjected to ring-opening polymerization. Furthermore, due to its dense structure, excellent mechanical characteristics such as a low coefficient of water absorption and a high elastic modulus are obtained.

Regarding the component (A), one kind thereof can be used alone, or two or more kinds thereof may be used in combination.

The (B) epoxy resin (hereinafter, may be referred to as component (B)) used for the present invention is incorporated as a component that controls the viscosity of the composition and increases curability of the composition. Examples of the component (B) include epoxy resins obtainable by using compounds such as an amine, a phenol, a carboxylic acid, and an intramolecular unsaturated carbon as precursors.

Examples of the epoxy resin obtainable by using an amine include regioisomers of each of tetraglycidyldiaminodiphenylmethane, a glycidyl compound of xylenediamine, triglycidylaminophenol, and glycidylaniline; and substituents thereof with an alkyl group or a halogen. Hereinafter, in a case where commercially available products are listed as examples, for liquid products, the complex viscoelastic modulus η^{∗} at 25°C obtainable by a dynamic viscoelasticity analyzer that will be mentioned below, will be described as the viscosity.

Examples of commercially available products of tetraglycidyldiaminodiphenylmethane include "SUMI-EPOXY" (registered trademark; hereinafter, the same) ELM434 (manufactured by Sumitomo Chemical Co., Ltd.), "ARALDITE" (registered trademark; hereinafter, the same) MY720, "ARALDITE" MY721, "ARALDITE" MY9512, "ARALDITE" MY9612, "ARALDITE" MY9634, "ARALDITE" MY9663 (all manufactured by Huntsman Advanced Materials LLC), and "jER" (registered trademark; hereinafter, the same) 604 (manufactured by Mitsubishi Chemical Corp.).

Examples of commercially available products of triglycidylaminophenol include "jER" 630 (viscosity: 750 mPa·s) (manufactured by Mitsubishi Chemical Corp.), "ARALDITE" MY0500 (viscosity: 3500 mPa·s), MY0510 (viscosity: 600 mPa·s) (all manufactured by Huntsman Advanced Materials LLC), and ELM100 (viscosity: 16000 mPa·s) (manufactured by Sumitomo Chemical Co., Ltd.).

Examples of commercially available products of glycidylanilines include GAN (viscosity: 120 mPa·s) and GOT (viscosity: 60 mPa·s) (all manufactured by Nippon Kayaku Co., Ltd.).

Examples of a glycidyl ether type epoxy resin obtainable by using phenol as a precursor include a bisphenol A type epoxy resin, a bisphenol F type epoxy resin, a bisphenol S type epoxy resin, an epoxy resin having a biphenyl skeleton, a phenol novolac type epoxy resin, a cresol novolac type epoxy resin, a resorcinol type epoxy resin, an epoxy resin having a naphthalene skeleton, a trisphenylmethane type epoxy resin, a phenol aralkyl type epoxy resin, a dicyclopentadiene type epoxy resin, a diphenylfluorene type epoxy resin, and various isomers, alkyl group-substituents, and halogen-substituents of each of these resins. Furthermore, an epoxy resin obtained by modifying an epoxy resin derived from phenol as a precursor, with urethane or isocyanate, is also included in this type.

Examples of commercially available products of a liquid bisphenol A type epoxy resin include "jER" 825 (viscosity: 5000 mPa·s), "jER" 826 (viscosity: 8000 mPa·s), "jER" 827 (viscosity: 10000 mPa·s), "jER" 828 (viscosity: 13000 mPa·s) (manufactured by Mitsubishi Chemical Corp.), "EPICLON" (registered trademark; hereinafter, the same) 850 (viscosity: 13000 mPa·s) (manufactured by DIC Corp.), "EPOTOHTO" (registered trademark; hereinafter, the same) YD-128 (viscosity: 13000 mPa·s) (manufactured by Nippon Steel & Sumikin Chemical Co., Ltd.), DER-331 (viscosity: 13000 mPa·s), and DER-332 (viscosity: 5000 mPa·s) (manufactured by Dow Chemical Company). Examples of commercially available products of a solid or semi-solid bisphenol A type epoxy resin include "jER" 834, "jER" 1001, "jER" 1002, "jER" 1003, "jER" 1004, "jER" 1004AF, "jER" 1007, and "jER" 1009 (all manufactured by Mitsubishi Chemical Corp.).

Examples of commercially available products of a liquid bisphenol F type epoxy resin include "jER" 806 (viscosity: 2000 mPa·s), "jER" 807 (viscosity: 3500 mPa·s), "jER" 1750 (viscosity: 1300 mPa·s), "jER" (all manufactured by Mitsubishi Chemical Corp.), "EPICLON" 830 (viscosity: 3500 mPa·s) (manufactured by DIC Corp.), "EPOTOHTO" YD-170 (viscosity: 3500 mPa·s), and "EPOTOHTO" YD-175 (viscosity: 3500 mPa·s) (all manufactured by Nippon Steel & Sumikin Chemical Co., Ltd.). Examples of commercially available products of a solid bisphenol F type epoxy resin include 4004P, "jER" 4007P, "jER" 4009P (all manufactured by Mitsubishi Chemical Corp.), "EPOTOHTO" YDF2001, and "EPOTOHTO" YDF2004 (all manufactured by Nippon Steel & Sumikin Chemical Co., Ltd.).

Examples of a bisphenol S type epoxy resin include EXA-1515 (manufactured by DIC Corp.).

Examples of commercially available products of an epoxy resin having a biphenyl skeleton include "jER" YX4000H, "jER" YX4000, "jER" YL6616 (all manufactured by Mitsubishi Chemical Corp.), and NC-3000 (manufactured by Nippon Kayaku Co., Ltd.).

Examples of commercially available products of a phenol novolac type epoxy resin include "jER" 152, "jER" 154 (all manufactured by Mitsubishi Chemical Corp.), "EPICLON" N-740, "EPICLON" N-770, and "EPICLON" N-775 (all manufactured by DIC Corp.).

Examples of commercially available products of a cresol novolac type epoxy resin include "EPICLON" N-660, "EPICLON" N-665, "EPICLON" N-670, "EPICLON" N-673, "EPICLON" N-695 (all manufactured by DIC Corp.), EOCN-1020, EOCN-102S, and EOCN-104S (all manufactured by Nippon Kayaku Co., Ltd.).

Examples of commercially available products of a resorcinol type epoxy resin include "DENACOL" (registered trademark; hereinafter, the same) EX-201 (viscosity: 250 mPa·s) (manufactured by Nagase ChemteX Corp.).

Examples of commercially available products of an epoxy resin having a naphthalene skeleton include "EPICLON" HP4032 (manufactured by DIC Corp.), NC-7000, and NC-7300 (all manufactured by Nippon Kayaku Co., Ltd.).

Examples of commercially available products of a trisphenylmethane type epoxy resin include TMH-574 (manufactured by Sumitomo Chemical Co., Ltd.).

Examples of commercially available products of a dicyclopentadiene type epoxy resin include "EPICLON" HP7200, "EPICLON" HP7200L, "EPICLON" HP7200H (all manufactured by DIC Corp.), "TACTIX" (registered trademark) 558 (manufactured by Huntsman Advanced Materials LLC), XD-1000-1L, and XD-1000-2L (all manufactured by Nippon Kayaku Co., Ltd.).

Examples of commercially available products of urethane- and isocyanate-modified epoxy resins include AER4152 having an oxazolidone ring (manufactured by Asahi Kasei E-Materials Corp.).

Examples of an epoxy resin obtainable by using a carboxylic acid as a precursor include a glycidyl compound of phthalic acid, hexahydrophthalic acid, a glycidyl compound of a dimer acid, and various isomers of each of these.

Examples of commercially available products of phthalic acid diglycidyl ester include "EPOMIK" (registered trademark; hereinafter, the same) R508 (viscosity: 4000 mPa·s) (manufactured by Mitsui Chemical, Inc.) and "DENACOL" EX-721 (viscosity: 980 mPa·s) (manufactured by Nagase ChemteX Corp.).

Examples of commercially available products of hexahydrophthalic acid diglycidyl ester include "EPOMIK" R540 (viscosity: 350 mPa·s) (manufactured by Mitsui Chemicals, Inc.) and AK-601 (viscosity: 300 mPa·s) (manufactured by Nippon Kayaku Co., Ltd.).

Examples of commercially available products of a dimer acid diglycidyl ester include "jER" 871 (viscosity: 650 mPa·s) (manufactured by Mitsubishi Chemical Corp.) and "EPOTOHTO" YD-171 (viscosity: 650 mPa·s) (manufactured by Nippon Steel & Sumikin Chemical Co., Ltd.).

Examples of an epoxy resin obtainable by using an intramolecular unsaturated carbon as a precursor include an alicyclic epoxy resin. Examples of the alicyclic epoxy resin include (3',4'-epoxycyclohexane) methyl-3,4-epoxycyclohexanecarboxylate, (3',4'-epoxycyclohexane) octyl-3,4-epoxycyclohexanecarboxylate, and 1-methyl-4-(2-methyloxiranyl)-7-oxabicyclo[4.1.0]heptane.

Examples of commercially available products of (3',4'-epoxycyclohexane) methyl-3,4-epoxycyclohexanecarboxylate include "CELLOXIDE" (registered trademark; hereinafter, the same) 2021P (viscosity: 250 mPa·s) (manufactured by Daicel Corp.), CY179 (viscosity: 400 mPa·s) (manufactured by Huntsman Advanced Materials LLC); examples of commercially available products of (3',4'-epoxycyclohexane) octyl-3,4-epoxycyclohexanecarboxylate include "CELLOXIDE" 2081 (viscosity: 100 mPa·s) (manufactured by Daicel Corp.); and examples of commercially available products of 1-methyl-4-(2-methyloxiranyl)-7-oxabicyclo[4.1.0]heptane include "CELLOXIDE" 3000 (viscosity: 20 mPa·s) (manufactured by Daicel Corp.).

According to the present embodiment, from the viewpoints of tackiness and drapeability, an epoxy resin that is liquid at 25°C can be incorporated. As the viscosity at 25°C of an epoxy resin that is liquid at 25°C is lower, it is more preferable from the viewpoints of tackiness and drapeability. Specifically, the viscosity may be greater than or equal to 5 mPa·s, which is the lower limit obtainable as a commercially available product of an epoxy resin, and less than or equal to 20000 mPa·s, or may be from 5 mPa·s to 15000 mPa·s. When the viscosity at 25°C is more than 20000 mPa·s, tackiness and drapeability may be deteriorated.

On the other hand, from the viewpoint of heat resistance, an epoxy resin that is solid at 25°C can be incorporated. The epoxy resin that is solid at 25°C may be an epoxy resin having a large aromatic content, and examples include an epoxy resin having a biphenyl skeleton, an epoxy resin having a naphthalene skeleton, and a phenol aralkyl type epoxy resin.

Regarding the component (B), one kind thereof can be used alone, or two or more kinds thereof can be used in combination.

Regarding the (C) curing agent having two or more phenolic hydroxyl groups in the molecule (hereinafter, may be referred to as component (C)) used for the present invention, a polyfunctional phenol such as a bisphenol may be mentioned, and examples include bisphenol A, bisphenol F, bisphenol S, thiodiphenol, and a bisphenol represented by the following General Formula (C-1). 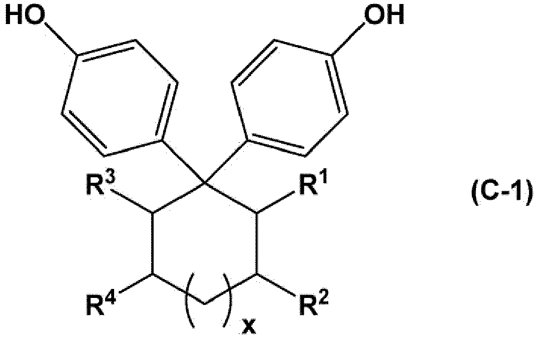 wherein in Formula (C-1), R¹, R², R³, and R⁴ each represent a hydrogen atom or a hydrocarbon group; in a case where R¹, R², R³, or R⁴ is a hydrocarbon group, the hydrocarbon group is a linear or branched alkyl group having 1 to 4 carbon atoms, or adjoining R¹ and R² or adjoining R³ and R⁴ are bonded to each other to form a substituted or unsubstituted aromatic ring having 6 to 10 carbon atoms or a substituted or unsubstituted alicyclic structure having 6 to 10 carbon atoms; and x represents 0 or 1.

Examples of the curing agent represented by the above-described General Formula (C-1) include compounds represented by the following formulae.

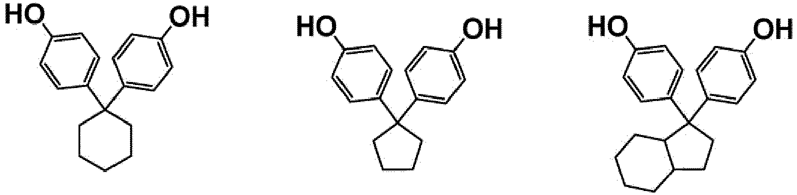

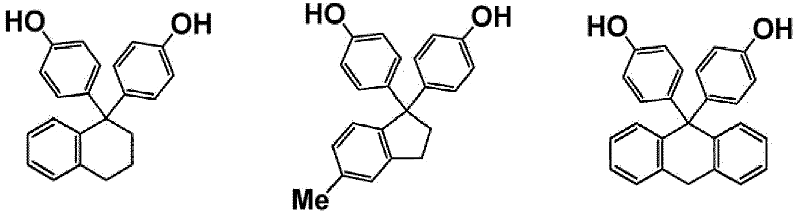

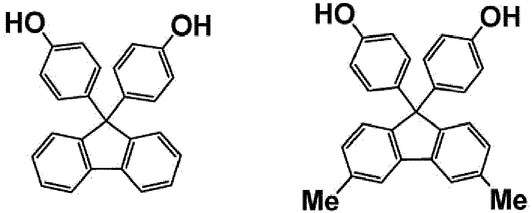

According to the present embodiment, from the viewpoint of sufficiently increasing the glass transition temperature of a resin cured product, the component (C) may be bisphenol A, bisphenol F, thiobisphenol (hereinafter, may be referred to as TDP), 9,9-bis(4-hydroxyphenyl)fluorene (hereinafter, may be referred to as BPF), and 1,1-bis(4-hydroxyphenyl)cyclohexane (hereinafter, may be referred to as BPC).

Regarding the component (C), one kind thereof can be used alone, or two or more kinds thereof can be used in combination.

According to the present embodiment, a curing agent other than the component (C) can be used in combination. Examples of the curing agent that can be used in combination include a tertiary aromatic amine represented by N,N-dimethylaniline, a tertiary aliphatic amine such as triethylamine, an imidazole derivative, and a pyridine derivative. These can be used singly or in combination of two or more kinds thereof.

The surface fiber layer of the prepreg according to the present embodiment contains a fabric including polyamide fibers.

The fabric used for the present invention is not particularly limited; however, for example, the fabric may be at least one selected from the group consisting of a knitted fabric, a woven fabric, and a nonwoven fabric, and the fabric may be a knitted fabric from the viewpoint that the fabric is stretchable and is not easily creased up at the time of producing a prepreg, the density of the polyamide resin is uniform, and the coefficients of variation of various physical properties (CAI strength, ILSS, interlaminar fracture toughness, and damaged area) of the fiber-reinforced composite material thus obtainable can be further reduced.

In a case where the fabric is a knitted fabric, the knitted fabric may be a weft-knitted single knit (flat knit or the like), a weft-knitted double knit (rib knit or the like), a warp knit (tricot, Raschel, or mirrors), or the like, and from the viewpoint of promoting productivity and thickness reduction of the knitted fabric, the fabric may be a weft-knitted single knit.

The lower limit value of the basis weight (mass per unit area) of the fabric is not particularly limited; however, the lower limit may be 3 g/m² or more or may be 3.5 g/m² or more. The upper limit value of the basis weight of the fabric is not particularly limited; however, the upper limit value may be 15 g/m² or less or may be 8 g/m² or less. When the lower limit value of the basis weight of the fabric is 3 g/m² or more, the production efficiency for the fabric is enhanced, and excellent handleability is also obtained at the time of producing a prepreg. When the upper limit value of the basis weight of the fabric is 15 g/m² or less, various physical properties (CAI strength, ILSS, interlaminar fracture toughness, and damaged area) of the fiber-reinforced composite material thus obtainable are further enhanced.

The lower limit value of the maximum opening area of the fabric is not particularly limited; however, the lower limit value may be 0.2 mm² or more or may be 0.3 mm² or more. The upper limit value of the maximum opening area of the fabric is not particularly limited; however, the upper limit value may be 3 mm² or less or may be 1.5 mm² or less. When the upper limit value of the maximum opening area of the fabric is 0.2 mm² or more, the impregnation properties of the fabric with the resin composition are further enhanced. When the upper limit value of the opening ratio of the fabric is 3 mm² or less, the damaged area at the time of impact application of the fiber-reinforced composite material thus obtainable is reduced, and the CAI strength can be achieved at a higher level. The maximum opening area of the fabric was defined as the area of the largest opening in the fabric observed within a 7×5 mm field of view of an optical microscope.

The lower limit value of the average opening area of the fabric is not particularly limited; however, the lower limit value may be 0.05 mm² or more or may be 0.1 mm² or more. The upper limit value of the average opening area of the fabric is not particularly limited; however, the upper limit value may be 1.5 mm² or less or may be 0.8 mm² or less. The lower limit value of the average opening area of the fabric may be 0.05 mm² or more from the viewpoint that the impregnation properties of the fabric with the resin composition are enhanced. The upper limit value of the average opening area of the fabric may be 1.5 mm² or less from the viewpoint of enhancing the CAI strength of the fiber-reinforced composite material thus obtainable and reducing the variation in the CAI strength. The average opening area of the fabric was defined as the average value of the areas of any ten openings in the fabric observed within a 7×5 mm field of view of an optical microscope.

The lower limit value of the elongation percentage in the longitudinal direction (vertical direction) of the fabric is not particularly limited; however, the lower limit value is 5% or more or may be 10% or more. When the lower limit value of the elongation percentage in the longitudinal direction of the fabric is 5% or more, the fabric is not likely to be creased up at the time of producing a prepreg, and a prepreg free of defects such as creases can be obtained. The upper limit value of the elongation percentage in the longitudinal direction of the fabric may be 100% or less. The elongation percentage in one direction of the fabric means a value measured by the method of JIS L1096 A (cut strip method). During the production of a prepreg, the longitudinal direction (MD direction) of the fabric and the longitudinal direction (MD direction) of the prepreg may be matched.

The lower limit value of the fiber diameter of the polyamide fibers is not particularly limited; however, the lower limit value may be 10 µm or more, may be 20 µm or more, or may be 30 µm or more. The upper limit value of the fiber diameter of the polyamide fibers is not particularly limited; however, the upper limit value may be 60 µm or less, may be 50 µm or less, or may be 40 µm or less. The lower limit value of the fiber diameter of the polyamide fibers may be 10 µm or more from the viewpoints of the strength and handleability of the fabric. The upper limit value of the fiber diameter of the polyamide fibers may be 60 µm or less from the viewpoint that further weight reduction and thickness reduction of the fiber-reinforced composite material can be promoted. Here, the fiber diameter means a value obtained by observing the fibers included in the fabric using an optical microscope and making measurement.

Examples of the polyamide fibers used for the present invention include polymers or copolymers having amide bonds, which are produced from an aliphatic amino acid, an aliphatic lactam, or an aliphatic diamine and an aliphatic carboxylic acid as starting raw materials.

Examples of the aliphatic amino acid include 6-aminocaproic acid, 11-aminoundecanoic acid, and 12-aminododecanoic acid.

Examples of the aliphatic lactam include caprolactam, laurolactam, octalactam, and undecanelactam.

Examples of the aliphatic diamine include tetramethylenediamine, hexamethylenediamine, undecamethylenediamine, dodecamethylenediamine, 2,2,4 -trimethylhexamethylenediamine, 2,4,4-trimethylhexamethylenediamine, 5-methylnonamethylenediamine, 2,4-dimethyloctamethylenediamine, meta-xylylenediamine, para-xylylenediamine, 1,3-bis(aminomethyl)cyclohexane, 1-amino-3-aminomethyl-3,5,5-trimethylcyclohexane, 3,8-bis(aminomethyl)tricyclodecane, bis(4-aminocyclohexyl)methane, bis(3-methyl-4-aminocyclohexyl)methane, 2,2-bis(4-aminocyclohexyl)propane, and bis(aminopropyl)piperazine.

Examples of the aliphatic carboxylic acid include adipic acid, suberic acid, azelaic acid, sebacic acid, and dodecanedioic acid.

As the polyamide resin included in the polyamide fibers used in the present embodiment, for example, a polymer of caprolactam, a polymer of laurolactam, a copolymer of caprolactam and laurolactam, polyhexamethylene sebacamide (nylon 6/12), polydecamethylene sebacamide (nylon 10/10), polydecamethylene dodecamide (nylon 10/12), polyundecamethylene adipamide (nylon 11/6), polyundecaneamide (nylon 11), polydodecaneamide (nylon 12), polybis(4-aminocyclohexyl)methane dodecamide (nylon PACM12), polybis(3-methyl-4-aminocyclohexyl)methane dodecamide (nylon dimethyl PACM12), and copolymers of these can be used.

The fabric including polyamide fibers, which is used for the present invention, is such that the polyamide fibers include a first polyamide resin and a second polyamide resin having a melting point higher than the melting point of the first polyamide resin by 7°C to 50°C. Regarding the first polyamide resin and the second polyamide resin used for the present invention, for example, those similar to the above-mentioned examples listed as the polyamide resin can be used. The fabric including polyamide fibers used for the present invention can be subjected to a heat treatment at a temperature higher than or equal to the melting point of the first polyamide resin and lower than or equal to the melting point of the second polyamide resin, in order to stabilize the form. The fabric including polyamide fibers, which is used for the present invention, may be a fabric in which a portion of the first polyamide resin is molten due to the above-described heat treatment.

The structure of the polyamide fibers is not particularly limited; however, a single fiber formed from a single polyamide resin and a composite fiber including two or more kinds of polyamide resins may be mentioned. From the viewpoint that by appropriately fusing the first polyamide resin by the above-mentioned heat treatment, the form of the fabric is stabilized, and as a result, the variation in the CAI strength of the fiber-reinforced composite material thus obtainable can be reduced, the structure of the polyamide fibers may be a composite fiber.

Examples of the composite fiber include a fiber having a core-sheath structure and a conjugate fiber. Among these, from the viewpoint that by appropriately fusing the first polyamide resin by a heat treatment during the production of the fabric, the form of the fabric is stabilized, and as a result, the variation in the CAI strength of the fiber-reinforced composite material thus obtainable can be reduced, the composite fiber may be a fiber having a core-sheath structure.

In a case where the structure of the polyamide fibers is a core-sheath structure, from the viewpoint that by appropriately fusing the first polyamide resin by a heat treatment during the production of a fabric, the form of the fabric is stabilized, and as a result, the variation in the CAI strength of the fiber-reinforced composite material can be reduced, and that by appropriately fusing the first polyamide resin during the production of the fiber-reinforced composite material, the second polyamide resin is appropriately suppressed from fusing and then infiltrating into the reinforcing fiber layer, the structure may be a core-sheath structure comprising a core part including the second polyamide resin and a sheath part including the first polyamide resin covering the core portion.

The content proportions of the first polyamide resin and the second polyamide resin in the polyamide fibers may be in the range of first polyamide resin : second polyamide resin = 70 : 30 to 30 : 70 or may be in the range of 60 : 40 to 40 : 60, at a mass ratio, from the viewpoint of appropriately fusing the first polyamide resin at the time of producing a fiber-reinforced composite material and appropriately suppressing the second polyamide resin from fusing and then infiltrating into the reinforcing fiber layer.

The melting point m₂ of the second polyamide resin is higher by 7°C to 50°C than the melting point m₁ of the first polyamide resin. The lower limit value of the melting point difference (m₂ - m₁) between the melting point m₂ of the second polyamide resin and the melting point m₁ of the first polyamide resin is 7°C or more, may be 10°C or more, may be 13°C or more, or may be 15°C or more. When the lower limit value of (m₂ - m₁) is 7°C or more, the temperature range becomes wider at the time of performing a heat treatment during the production of a fabric, and therefore, the heat treatment can be carried out stably. The upper limit value of the melting point difference (m₂ - m₁) is 50°C or less or may be 40°C or less. When the upper limit value of the melting point difference (m₂ - m₁) is 50°C or less, fusion of the second polyamide resin can be appropriately promoted during the production of the fiber-reinforced composite material.

The fusion temperature M₁ of the first polyamide resin in the resin composition 5 may be lower by 5°C or more or may be lower by 10°C or more, than the curing temperature of the resin composition 5 in the surface fiber layer 6, because fusion of the first polyamide resin can be promoted during the production of the fiber-reinforced composite material.

The fusion temperature M₂ of the second polyamide resin in the resin composition 5 may be higher by 1°C or more or may be higher by 5°C or more, than the curing temperature of the resin composition 5 in the surface fiber layer 6, because the second polyamide resin can be appropriately suppressed from fusing and then completely infiltrating into the reinforcing fiber layer during the production of the fiber-reinforced composite material.

As the first polyamide resin and the second polyamide resin, for example, polyamide 6, a polyamide 12 resin, a polyamide resin formed from a copolymer obtained by copolymerizing caprolactam and laurolactam, and a polyamide 1010 resin can be used.

The polyamide 6 resin according to the present specification refers to a polyamide resin obtained by ring-opening polymerizing caprolactam.

The polyamide 12 resin according to the present specification refers to a polyamide resin obtained by ring-opening polymerizing laurolactam.

The copolymer obtained by copolymerizing caprolactam and laurolactam is a product called polyamide 6/12 or the like. The copolymer may be a random copolymer or may be a block copolymer.

The polyamide 1010 resin according to the present specification refers to a polyamide resin obtained by polycondensing sebacic acid and decamethylenediamine.

The first polyamide resin used in the present embodiment may be a polyamide 12 resin, from the viewpoint of appropriately fusing the polyamide resin during the production of the fiber-reinforced composite material.

In the case of using a polyamide resin formed from a copolymer obtained by copolymerizing caprolactam and laurolactam as the first polyamide resin, the copolymerization ratio (molar ratio) of caprolactam and laurolactam may be in the range of 1 : 9 to 3 : 7, may be in the range of 1 : 9 to 25 : 75, or may be in the range of 1 : 9 to 2 : 8. By adjusting the copolymerization ratio to be in the above-described range, the melting point of the polyamide resin and the fusion temperature of the polyamide resin in the resin composition can be adjusted to appropriate ranges, and since the damaged area after impact application is further reduced, the CAI strength is further enhanced.

The second polyamide resin used in the present embodiment may be a polyamide 1010 resin from the viewpoint of appropriately suppressing the second polyamide resin from fusing and then infiltrating into the reinforcing fiber layer during the production of the fiber-reinforced composite material.

In the case of using a polyamide resin formed from a copolymer obtained by copolymerizing caprolactam and laurolactam as the second polyamide resin, the copolymerization ratio (molar ratio) of caprolactam and laurolactam may be in the range of 9 : 1 to 7 : 3, may be in the range of 9 : 1 to 75 : 25, or may be in the range of 9 : 1 to 8 : 2. By adjusting the copolymerization ratio to be in the above-described range, the melting point of the polyamide resin and the fusion temperature of the polyamide resin in the resin composition can be adjusted to appropriate ranges, and since the damaged area after impact application is further reduced, the CAI strength is further enhanced.

Regarding the combination of the first polyamide resin and the second polyamide resin used in the present embodiment, from the viewpoint that at the time of performing a heat treatment during the production of a fabric, the first polyamide resin is fused, the polyamide fibers are fusion-bonded with each other to stabilize the fabric, and the variation in the CAI strength of the fiber-reinforced composite material thus obtainable can be reduced, and from the viewpoint that the first polyamide resin is appropriately fused during the production of the fiber-reinforced composite material, and the second polyamide resin can be appropriately suppressed from fusing and then infiltrating into the reinforcing fiber layer, a combination of a polyamide 12 resin as the first polyamide resin and a polyamide 1010 resin as the second polyamide resin may be used.

The fabric used in the present embodiment may include fibers other than polyamide fibers. Regarding such fibers, a polyether sulfone resin, a polyphenylene ether resin, a polyacetal resin, a polyphenylene sulfide resin, a polyetherimide resin, a polyether ether ketone resin, and the like may be mentioned.

According to the present embodiment, the content proportions of the component (A) and the component (B) in the resin composition 2 may be such that when the sum of the component (A) and the component (B) is taken as 100 parts by mass, the lower limit value of the content proportion of the component (A) is 65 parts by mass or more, that is, the upper limit value of the content proportion of the component (B) is 35 parts by mass or less. When the content proportion of the component (A) is 65 parts by mass or more, that is, in a case where the content proportion of the component (B) is 35 parts by mass or less, the elastic modulus and water resistance of the fiber-reinforced composite thus obtainable tend to be further enhanced, and the glass transition temperature of a resin cured product tends to further increase. The content proportions of the component (A) and the component (B) may be such that when the sum of the component (A) and the component (B) is taken as 100 parts by mass, the upper limit value of the content proportion of the component (A) is 78 parts by mass or less, that is, the lower limit value of the content proportion of the component (B) is 22 parts by mass or more.

Furthermore, the lower limit value of the content of the component (C) in the resin composition 2 may be 5 parts by mass or more or may be 7 parts by mass or more, when the sum of the component (A) and the component (B) is taken as 100 parts by mass. When the lower limit value of the content of the component (C) is 5 parts by mass or more, a strong crosslinked structure is formed during curing of the resin composition, and as a result, mechanical properties such as the glass transition temperature of a cured product tend to be further enhanced. From a similar point of view, the upper limit value of the content of the component (C) in the resin composition 2 may be 20 parts by mass or less or 15 parts by mass or less, when the sum of the component (A) and the component (B) is taken as 100 parts by mass.

According to the present embodiment, the content proportions of the component (A) and the component (B) in the surface fiber layer 6 may be such that when the sum of the component (A) and the component (B) is taken as 100 parts by mass, the lower limit value of the content proportion of the component (A) is 65 parts by mass or more, that is, the upper limit value of the content proportion of the component (B) is 35 parts by mass or less. In a case where the content proportion of the component (A) is 65 parts by mass or more, that is, the content proportion of the component (B) is 35 parts by mass or less, the elastic modulus and water resistance of the fiber-reinforced composite thus obtainable tend to be further enhanced, and the glass transition temperature of the resin cured product tends to be further increased. The content proportions of the component (A) and the component (B) in the surface fiber layer 6 may be such that when the sum of the component (A) and the component (B) is taken 100 parts by mass, the upper limit value of the content proportion of the component (A) is 78 parts by mass or less, that is, the lower limit value of the content proportion of the component (B) is 22 parts by mass or more.

Furthermore, the lower limit value of the content of the component (C) in the surface fiber layer 6 may be 5 parts by mass or more or may be 7 parts by mass or more when the sum of the component (A) and the component (B) is taken as 100 parts by mass. When the content of the component (C) is 5 parts by mass or more, the CAI strength and the flexural modulus of the fiber-reinforced composite material can be further enhanced. The upper limit value of the content of the component (C) in the surface fiber layer 6 may be 20 parts by mass or less or may be 15 parts by mass or less when the sum of the component (A) and the component (B) is taken as 100 parts by mass. When the content of the component (C) is 20 parts by mass or less, the mechanical properties such as glass transition temperature of the cured product tend to be further enhanced.

The lower limit value of the content of the polyamide fibers in the surface fiber layer 6 may be 15 parts by mass or more or may be 25 parts by mass or more when the sum of the component (A) and the component (B) is taken as 100 parts by mass. When the content of the polyamide fibers is 15 parts by mass or more, the CAI strength, ILSS, and interlaminar fracture toughness of the fiber-reinforced composite material are further enhanced, and the damaged area after impact application can be further reduced. The upper limit value of the content of the polyamide fibers in the surface fiber layer 6 may be 45 parts by mass or less or may be 40 parts by mass or less, when the sum of the component (A) and the component (B) is taken as 100 parts by mass. When the content of the polyamide fibers is 45 parts by mass or less, the flexural modulus tends to be further enhanced. According to the present embodiment, the total content of the first polyamide resin and the second polyamide resin may be in the above-described range.

The surface fiber layer 6 in the prepreg of the present embodiment refers to the area extending from the prepreg surface to the reinforcing fibers of the reinforcing fiber layer, and the content of the polyamide fibers in the surface fiber layer can be calculated, for example, based on the contents of the component (A), component (B), and component (C) detected in the area extending from the prepreg surface to the reinforcing fibers of the reinforcing fiber layer.

In the prepreg of the present embodiment, for example, other components such as (D) a toughness improver can be incorporated into the surface fiber layer and the reinforcing fiber layer to the extent that does not impair the physical properties of the prepreg. Examples of the (D) toughness improver include phenoxy resins "YP-70", "YP-50", "FX-316" (all registered trademarks, manufactured by Nippon Steel & Sumikin Chemical Co., Ltd.), and polyether sulfone "SUMIKAEXCEL PES" (all registered trademark, manufactured by Sumitomo Chemical Co., Ltd.).

As still other components, nanocarbon, a flame retardant, a mold release agent, and the like can be incorporated. Examples of the nanocarbon include carbon nanotubes, fullerene, and respective derivatives thereof. Examples of the flame retardant include red phosphorus; phosphoric acid esters such as triphenyl phosphate, tricresyl phosphate, trixylenyl phosphate, cresyl diphenyl phosphate, xylenyl diphenyl phosphate, resorcinol bisphenyl phosphate, and bisphenol A bisdiphenyl phosphate; and boric acid esters. Examples of the mold release agent include silicone oils, stearic acid esters, and carnauba wax.

Regarding the reinforcing fibers according to the present invention, glass fibers, carbon fibers, graphite fibers, aramid fibers, boron fibers, alumina fibers, silicon carbide fibers, and the like can be used. Two or more kinds of these fibers may be used as a mixture. In order to obtain a molded article that is more lightweight and has higher durability, carbon fibers or graphite fibers may be used, or carbon fibers may be used.

Regarding the carbon fibers as used in the present invention, PAN-based carbon fibers and pitch-based carbon fibers can all be used.

According to the present invention, it is possible to use all kinds of carbon fibers or graphite fibers according to the use applications. Since a composite material having excellent impact resistance and having high rigidity and mechanical strength is obtained, the tensile modulus in a strand tensile test of carbon fibers or graphite fibers may be 150 to 650 GPa, may be 200 to 550 GPa, or may be 230 to 500 GPa. Incidentally, the strand tensile test refers to a test performed on the basis of JIS R7608 (2007) after impregnating carbon fibers or graphite fibers in a bundle form with an epoxy resin, curing the epoxy resin at a temperature of 130°C for 35 minutes.

The lower limit value of the basis weight of the reinforcing fibers of the present invention is not particularly limited; however, since the number of laminated sheets of the prepreg can be reduced and workability is enhanced when the fiber-reinforced composite material is molded, the lower limit value may be 75 g/m² or more or may be 100 g/m² or more. The upper limit value of the basis weight of the reinforcing fibers may be 300 g/m² or less or may be 200 g/m² or less, from the viewpoint that the degree of freedom of lamination design increases when the fiber-reinforced composite material is molded.

The form of the reinforcing fibers in the prepreg of the present invention is not particularly limited, and for example, long fibers aligned in one direction, a tow, a woven fabric, a mat, a knit, a braid, short fibers chopped to a length of less than 10 mm, and the like can be used. Here, the long fibers are substantially continuous single fibers or fiber bundles having a length of 10 mm or more. Short fibers are fiber bundles cut to a length of less than 10 mm. For use applications where high specific strength and specific elastic modulus are required, an arrangement in which the reinforcing fiber base materials are aligned in a single direction as in the case of the prepreg of the present embodiment is most suitable; however, a cloth (textile)-like arrangement that is easily handleable is also applicable.

The prepreg of the present embodiment may be such that the lower limit value of the quantity of reinforcing fibers per unit area is 25 g/m² or more. When the quantity of reinforcing fibers is less than 25 g/m², it is necessary to employ a large number of laminated sheets in order to obtain a predetermined thickness when the fiber-reinforced composite material is molded, and the operation may become complicated. The upper limit value of the quantity of reinforcing fibers per unit area may be 3000 g/m² or less. When the amount of the reinforcing fibers is more than 3000 g/m², the drapeability of the prepreg tends to deteriorate. Incidentally, when the prepreg has a flat surface or a simple face, the amount of the reinforcing fibers may exceed 3000 g/m².

The lower limit value of the content percentage of the reinforcing fibers in the prepreg of the present embodiment may be 30% by mass or more, may be 35% by mass or more, or may be 40% by mass or more. When the content percentage is 30% by mass or more, advantages of a fiber-reinforced composite material having excellent specific strength and specific elastic modulus are further obtained, and the amount of heat generation during curing does not become too large at the time of molding the fiber-reinforced composite material. The upper limit value of the content percentage of the reinforcing fibers in the prepreg of the present embodiment may be 90% by mass or less, may be 85% by mass or less, or may be 80% by mass or less. When the content percentage is 90% by mass or less, more satisfactory impregnation with the resin is achieved, and voids in the fiber-reinforced composite material thus obtainable tend to be further reduced.

The lower limit value of the proportion occupied by the mass of polyamide fibers in the total mass of the component (A), component (B), component (C), and polyamide fibers in the prepreg of the present embodiment is not particularly limited but may be 5% by mass or more or may be 8% by mass or more. The lower limit value of the proportion of the mass of the polyamide fibers may be 5% by mass or more from the viewpoint of reducing the damaged area after impact application and enhancing the CAI strength in the fiber-reinforced composite material. The upper limit value of the proportion occupied by the mass of the polyamide fibers in the total mass of the component (A), component (B), component (C), and polyamide fibers in the prepreg of the present embodiment is not particularly limited; however, the upper limit value may be 30% by mass or less or may be 20% by mass or less. When the proportion of the mass of the polyamide fibers is 30% by mass or less, the flexural modulus of the fiber-reinforced composite material is enhanced (particularly at high temperatures).

Next, a method for producing a prepreg according to the present embodiment will be described. The method for producing a prepreg according to the present embodiment comprises a disposition step of disposing a fabric 4 on at least one surface of a reinforcing fiber base material including reinforcing fibers 1; and before or after the disposition step or simultaneously with the disposition step, an impregnation step of supplying a resin composition to the reinforcing fiber base material and impregnating the reinforcing fibers 1 with the resin composition in between the fibers.

In a case where the method for producing a prepreg according to the present embodiment comprises the impregnation step before the disposition step, a prepreg 10 is obtained by preparing a reinforcing fiber base material in which the reinforcing fibers 1 are aligned in one direction, impregnating the reinforcing fiber base material with a resin composition including the above-described components (A) to (C), and then disposing the fabric 4 on at least one surface of the reinforcing fiber base material.

In a case where the method for producing a prepreg according to the present embodiment comprises the impregnation step simultaneously with the disposition step, examples of such an embodiment include an embodiment of preparing a reinforcing fiber base material in which the reinforcing fibers 1 are aligned in one direction, disposing a fabric 4 on at least one surface of the reinforcing fiber base material, and at the same time, impregnating the reinforcing fiber base material with a resin composition through the fabric 4 from the surface of the fabric 4 opposite to the surface in contact with the reinforcing fiber base material; an embodiment of preparing a reinforcing fiber base material in which reinforcing fibers 1 are aligned in one direction, impregnating the reinforcing fiber base material with a resin composition from the top of at least one surface of the reinforcing fiber base material, and at the same time, disposing a fabric 4 on the surface impregnated with the resin composition of the reinforcing fiber base material; and an embodiment of preparing a reinforcing fiber base material in which reinforcing fibers 1 are aligned in one direction, impregnating a fabric 4 with a resin composition in advance, and then disposing the fabric 4 impregnated with the resin composition on at least one surface of the reinforcing fiber base material. Since the obtainable prepreg has excellent tacky adhesiveness between layers when the prepregs are laminated, the fabric 4 may be disposed on at least one surface of the reinforcing fiber base material, and at the same time, the reinforcing fiber base material may be impregnated with the resin composition through the fabric 4 from the surface of the fabric 4 opposite to the surface in contact with the reinforcing fiber base material.

In a case where the method for producing a prepreg according to the present embodiment comprises the impregnation step after the disposition step, the prepreg 10 is obtained by preparing a reinforcing fiber base material in which reinforcing fibers 1 are aligned in one direction, disposing a fabric 4 on at least one surface of the reinforcing fiber base material, and then impregnating the reinforcing fiber base material with a resin composition including the above-described components (A) to (C). The prepreg 10 obtained by the above-described disposition step and the impregnation step is a product in which the reinforcing fiber base material and the fabric 4 are impregnated with the resin composition.

Each resin composition to be used for impregnating the reinforcing fiber base material can be prepared by kneading the components (A) to (C) and optionally other components.

The method of kneading the resin composition is not particularly limited, and for example, a kneader, a planetary mixer, or a twin-screw extruder is used. Furthermore, when the resin composition includes particles, the particles may be diffused in a liquid resin component in advance using a Homomixer, a three-roll, a ball mill, a bead mill, ultrasonic waves, and the like. In addition, during mixing with a matrix resin, preliminary diffusion of the particles, and the like, if necessary, the resin composition may be heated or cooled or may be under pressure or under reduced pressure. From the viewpoint of storage stability, after kneading, the resin composition may be rapidly stored in a refrigerator or a freezer.

The viscosity of the resin composition may be 10 to 20000 Pa·s, may be 10 to 10000 Pa·s, or may be 50 to 6000 Pa·s, at 50°C from the viewpoint of production of a precursor film. When the viscosity is less than 10 Pa·s, tackiness of the resin composition increases, and it may be difficult to apply the resin composition. Furthermore, when the viscosity is more than 20000 Pa·s, the resin composition becomes semi-solid, and application is difficult.

Regarding a method of impregnating the resin composition, a wet method of dissolving the resin composition in a solvent such as methyl ethyl ketone or methanol to lower the viscosity and using the resin composition for impregnation; a hot melt method (dry method) of lowering the viscosity by heating and using the resin composition for impregnation; and the like may be mentioned.

The wet method is a method of immersing reinforcing fibers in a solution of a resin composition, subsequently pulling up the reinforcing fibers, and evaporating the solvent using an oven, or the like. The hot melt method is a method of directly impregnating reinforcing fibers with a resin composition that has been heated to lower the viscosity, or a method of first coating a release paper or the like with a resin composition to produce a film, subsequently stacking the film from both sides or one side of the reinforcing fibers, and heating and pressurizing the assembly to impregnate the reinforcing fibers with the resin. The hot melt method is preferred because there is substantially no solvent remaining in the prepreg.

The prepreg according to the present embodiment can be produced into a fiber-reinforced composite material, after lamination, by a method of heating and curing the resin while applying pressure to the laminate, or the like. Here, examples of the method of applying heat and pressure include a press molding method, an autoclave molding method, a bagging molding method, a wrapping tape method, and an internal pressure molding method. The wrapping tape method is a method of winding a prepreg around a core metal such as a mandrel and molding a tubular body made of a fiber-reinforced composite material and is a method that is suitable at the time of producing a rod-shaped body such as a golf shaft or a fishing rod. More specifically, this is a method of winding a prepreg around a mandrel, winding a wrapping tape formed from a thermoplastic film on the outer side of the prepreg in order to fix the prepreg and apply pressure, heating and curing the resin in an oven, and then taking out the core metal to obtain a tubular body.

The internal pressure molding method is a method of performing molding by setting, in a mold, a preform obtained by winding a prepreg around an internal pressure applying body such as a tube made of a thermoplastic resin, and then introducing a gas at a high pressure to the internal pressure applying body to apply pressure while heating the mold at the same time. This method is preferably used when an object having a complicated shape such as a golf shaft, a bud, or a racket for tennis or badminton is molded.

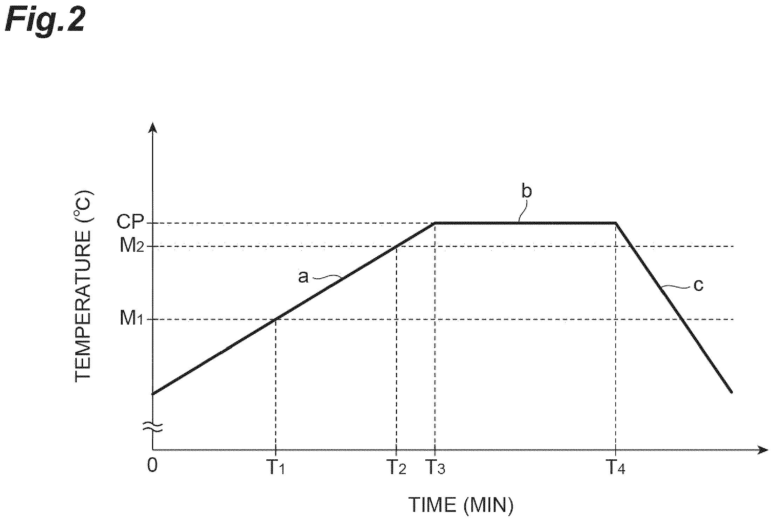

FIG. 2 is a schematic diagram showing an example of the curing profile. In FIG. 2, M₁ represents the fusion temperature (°C) of the first polyamide resin inside the surface fiber layer, and M₂ represents the fusion temperature (°C) of the second polyamide resin inside the surface fiber layer. In the curing profile shown in FIG. 2, a process of heating a laminate obtained by laminating a plurality of the above-mentioned prepregs to a predetermined curing temperature CP (°C) at a predetermined rate of temperature increase (line a in FIG. 2), retaining the laminate at the predetermined curing temperature CP (°C) for a predetermined time (T₄ - T₃) to cure the resin (line b in FIG. 2), and then lowering the temperature, is shown.

The curing temperature CP (°C) is appropriately set, so that the resin composition 2 including the component (A) to the component (C) is sufficiently cured, according to the type of the component (C), the mixing ratio of the component (A) and the component (B), or the like.

The curing temperature CP (°C) can be set to, for example, a temperature between 140°C and 200°C, and from the viewpoints of productivity and control of the fused state of polyamide, the curing temperature CP may be set to a temperature between 160°C and 195°C. Incidentally, the curing temperature refers to the temperature of the prepreg.

According to the present embodiment, from the viewpoint of appropriately fusing the first polyamide resin, CP may be a temperature higher than M₁°C by 1°C to 100°C, may be a temperature higher than M₁°C by 5°C to 70°C, may be a temperature higher than M₁°C by 5°C to 60°C, may be a temperature higher than M₁°C by 7°C to 60°C, may be a temperature higher than M₁°C by 7°C to 50°C, or may be a temperature higher than M₁°C by 10°C to 50°C.

Furthermore, from the viewpoint of appropriately suppressing the second polyamide resin from fusing and then infiltrating into the reinforcing fiber layer while performing sufficient resin curing, the CP may have an upper limit at a temperature higher than M₂°C by 10°C, and the CP may be a temperature in the range of -20°C to 10°C with respect to M₂°C, or may be a temperature in the range of -10°C to 10°C with respect to M₂°C.

According to the present embodiment, the first polyamide resin and the second polyamide resin may be selected so as to satisfy the above-described conditions, by employing the curing temperature CP (°C) as an index. In this case as well, the above-mentioned relation between the first polyamide resin and the second polyamide resin may be satisfied. On the other hand, by employing the fusion temperatures M₁°C and M₂°C as indices, primary curing may be carried out at a temperature where M₁ < CP < M₂, and then in order to cause curing to sufficiently proceed, secondary curing may be carried out at a temperature higher than M₂.

The rate of temperature increase up to the curing temperature CP (°C) may be 0.1°C to 5.0°C/min or may be 0.3°C to 3.0°C/min. There may be a difference between the temperature of temperature increase up to below M₁ (°C) and the rate of temperature increase from M₁ (°C) to CP (°C); however, according to the present embodiment, the rate of temperature increase may be in the above-described range at least between M₁ and CP.

Furthermore, in a case where the curing temperature CP (°C) is higher than M₂°C, the rate of temperature increase up to below M₁°C, the rate of temperature increase between M₁ (°C) and M₂ (°C), and the rate of temperature increase between M₂ (°C) and CP (°C) may be different.

According to the present embodiment, the rate of temperature increase up to below M₁ (°C) may be 0.1°C to 10.0°C/min, may be 0.1°C to 5.0°C/min, or may be 0.3°C to 3.0°C/min. The rate of temperature increase between M₁ (°C) and M₂ (°C) may be 0.1°C to 5.0°C/min or may be 0.3°C to 3.0°C/min. The rate of temperature increase between M₂ (°C) and CP (°C) may be 0.1°C to 5.0°C/min or may be 0.3°C to 3.0°C/min.

The pressure at the time of heating may be 0.2 to 1.0 MPa or may be 0.3 to 0.8 MPa.

After heating, the temperature can be lowered at a rate of -0.3°C to -3.0°C/min.

In this manner, a fiber-reinforced composite material is obtained.

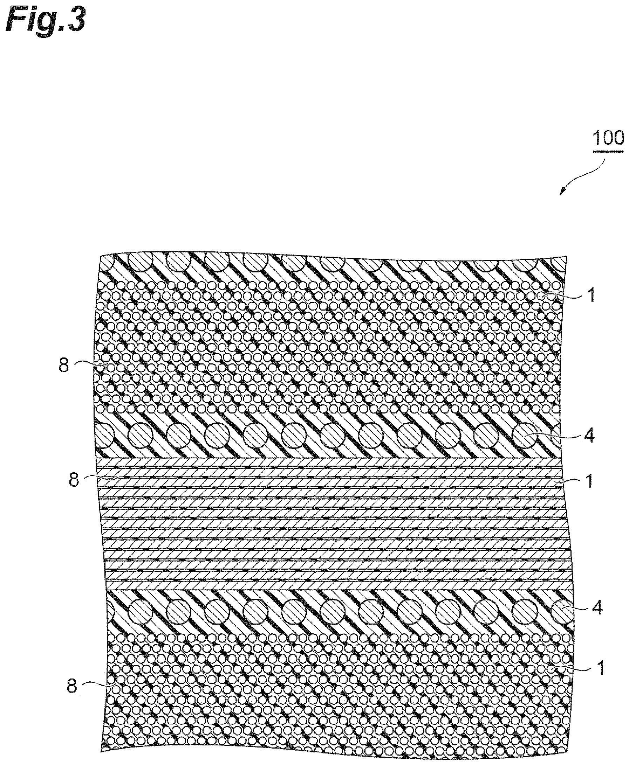

FIG. 3 is a schematic cross-sectional view for describing the fiber-reinforced composite material according to the present invention. The fiber-reinforced composite material 100 shown in FIG. 3 is formed by including reinforcing fibers 1, a resin cured product 8, and a fabric 4 including polyamide fibers. The fiber-reinforced composite material 100 can be obtained by the above-mentioned production method of the present embodiment, that is, by laminating a plurality of prepregs 10 and heating the laminate under pressure. Incidentally, the fabric 4 including polyamide fibers is shown in FIG. 3 in the same manner as in the case of the surface fiber layer of the prepreg; however, those are fused by pressurization and heating and are deformed as a result of flowing or binding between fibers.

Furthermore, the fiber-reinforced composite material obtainable by the method of the present embodiment can also be obtained by directly impregnating a reinforcing fiber base material with a resin composition and curing the resin composition. For example, the fiber-reinforced composite material can also be produced by a method of disposing a reinforcing fiber base material and a fabric disposed on the surface of the reinforcing fiber base material inside a mold, subsequently pouring a resin composition including the above-described components (A) to (C) to impregnate the reinforcing fiber base material and the fabric, and curing the resin composition; or a method of laminating a reinforcing fiber base material, a fabric including polyamide fibers, and a film formed from a resin composition including the components (A) to (C), and heating and pressurizing the laminate. The film can be obtained in advance by applying a predetermined amount of a resin composition on a release paper or a release film to a uniform thickness. Examples of the reinforcing fiber base material include long fibers aligned in one direction, a bidirectionally woven fabric, a nonwoven fabric, a mat, a knit, and a braid. Furthermore, lamination as used herein includes not only the case of simply superposing the reinforcing fiber base materials but also the case of preforming by attaching reinforcing fiber base materials to various molds or core materials. As the core material, a foam core, a honeycomb core, and the like may be used. As the foam core, urethane or polyimide may be used. As the honeycomb core, an aluminum core, a glass core, or an aramid core may be used.

The fiber-reinforced composite material obtainable by the method of the present embodiment is such that the compression-after-impact strength (CAI strength) measured according to ASTM D7136 and D7137 may be 250 MPa or more or may be 300 MPa or more.

The fiber-reinforced composite material obtainable by the method of the present embodiment is such that the mode I interlaminar fracture toughness value (G1c) measured according to ASTM D5528 may be 400 J/m² or more or may be 450 J/m² or more.

The fiber-reinforced composite material obtainable by the method of the present embodiment is such that the mode II interlaminar fracture toughness value (G2c) measured according to Composite Materials Handbook 17-1 may be 1000 J/m² or more or may be 2100 J/m² or more.

The fiber-reinforced composite material obtainable by the method of the present embodiment is such that the interlaminar shear strength (ILSS) measured according to ASTM D2344 may be 90 MPa or more or may be 100 MPa or more.

The fiber-reinforced composite material obtainable by the method of the present embodiment is such that the damaged area after impact application may be less than 1500 mm² or may be less than 700 mm². The damaged area after impact application means a value measured by a non-destructive inspection using ultrasonic flaw detection.

The coefficients of variation of the various physical properties (CAI strength, ILSS, interlaminar fracture toughness value, and damaged area after impact application) of the fiber-reinforced composite material obtainable by the method of the present embodiment are values obtained by measuring each of the CAI strength, the ILSS, the interlaminar fracture toughness value, and the damaged area after impact application six times, and dividing the standard deviation of the measured values obtained for six times by the average value of the measured values obtained for six times.

The fiber-reinforced composite material obtainable by the method of the present embodiment is such that the coefficient of variation of the CAI strength may be less than 6.0% or may be less than 4.0%.

The fiber-reinforced composite material obtainable by the method of the present embodiment is such that the coefficient of variation of Glc may be less than 6.0% or may be less than 4.0%.

The fiber-reinforced composite material obtainable by the method of the present embodiment is such that the coefficient of variation of G2c may be less than 6.0% or may be less than 4.0%.

The fiber-reinforced composite material obtainable by the method of the present embodiment is such that the coefficient of variation of the ILSS may be less than 2.0% or may be less than 1.0%.

The fiber-reinforced composite material obtainable by the method of the present embodiment is such that the coefficient of variation of the damaged area after impact application may be less than 8.0% or may be less than 6.0%.

The fiber-reinforced composite material obtainable by the method of the present embodiment having the above-described physical properties is suitably used for railway vehicles, aircraft, construction members, and other general industrial use applications.

### Examples

Hereinafter, the present invention will be specifically described by way of Examples; however, the present invention is not intended to be limited to these.

### <Fabric including polyamide fibers>

### (Examples 1 to 15 and Comparative Examples 2 to 4)

Fabrics shown in Table 1 to Table 3 were used as the fabric including polyamide fibers. In a case where the polyamide fibers have a core-sheath structure, each polyamide fiber comprises a core part formed from a second polyamide resin and a sheath part covering the core part and formed from a first polyamide resin. In a case where the fabric used is a knitted fabric, the method of knitting the knitted fabric is circular knitting. In a case where the polyamide fibers used were single fibers, the single fibers were twisted together to form a single twisted yarn, and then a knitted fabric or a woven fabric was produced. Incidentally, in Comparative Example 3, since the melting points of the first polyamide resin and the second polyamide resin were close to each other, and a heat treatment could not be performed stably, a fabric could not be produced.

Regarding the first polyamide resin and the second polyamide resin, the following raw materials were used.
PA6: Polyamide 6 resin
PA12: Polyamide 12 resin
PA1010: Polyamide 1010 resin
PA6/PA12 (20/80): Polyamide 6/12 copolymer (random copolymer) obtained by copolymerizing caprolactam and laurolactam at a molar ratio of 20 : 80
PA6/PA12 (80/20): Polyamide 6/12 copolymer (random copolymer) obtained by copolymerizing caprolactam and laurolactam at a molar ratio of 80 : 20

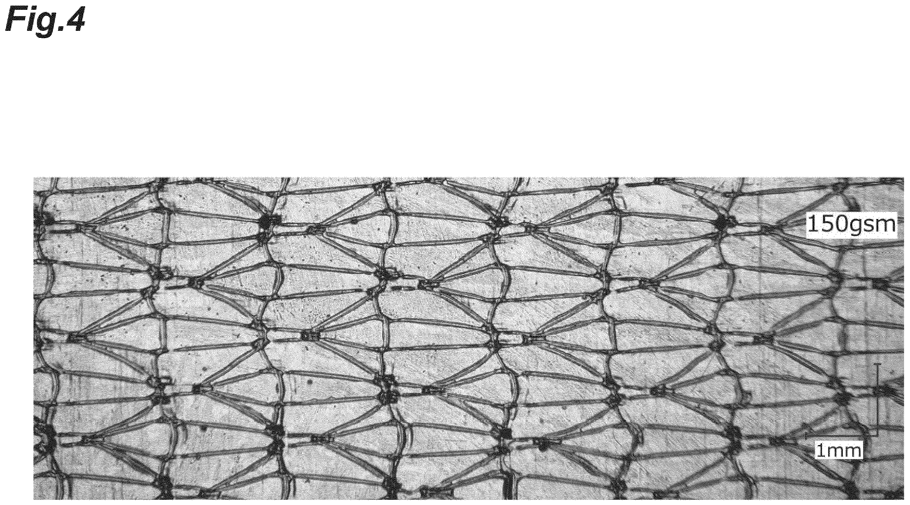

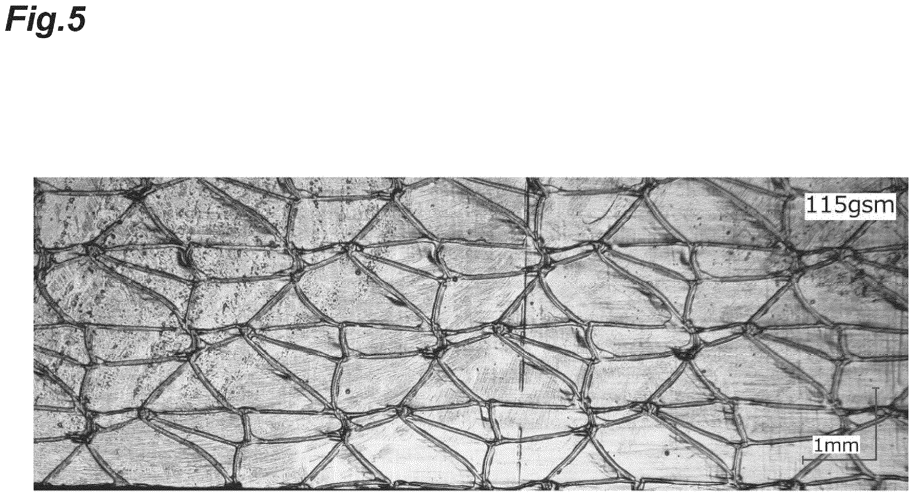

FIG. 4 is a photograph of a fabric used in Example 1. FIG. 5 is a photograph of a fabric used in Example 2.

### (Comparative Example 1)

A fabric including polyamide fibers was not used.

### (Comparative Example 5)

Polyamide resin particles were added to the resin composition as will be described below, instead of the fabric including polyamide fibers.

### <Resin composition>

### (Examples 1 to 15 and Comparative Examples 1, 2, and 4)

The raw materials were heated and mixed at the proportions shown in Tables 1 to 3, and resin compositions were obtained. The raw materials used herein are as follows.
Component (A): Benzoxazine resin
   F-a: Bisphenol F-aniline type (F-a type benzoxazine, manufactured by Shikoku Chemicals Corp.)
   P-a: Phenol-aniline type (P-a type benzoxazine, manufactured by Shikoku Chemicals Corp.)
Component (B): Epoxy resin
   2021P: "CELLOXIDE" (registered trademark) 2021P (manufactured by Daicel Corp.)
Component (C): Curing agent
   BPF (9,9-bis(4-hydroxyphenyl)fluorene, manufactured by Osaka Gas Chemicals Co., Ltd.)
Component (D): Toughness improver
   YP70: Phenoxy resin (YP-70, manufactured by Nippon Steel & Sumikin Chemical Co., Ltd.)

### (Comparative Example 5)

The raw materials were heated and mixed at the proportions shown in Table 4, and a first resin composition that did not contain particles ("First" composition in the table) and a second resin composition containing particles ("Second" composition in the table) were obtained. Incidentally, in addition to the raw materials used in Examples 1 to 15 and Comparative Examples 1, 2, and 4, the following raw materials were used.

Polyamide resin particles:
PA12 resin particles: Polyamide 12 resin particles (trade name: VESTOSINT 2159, average particle size 10 µm, manufactured by Daicel-Evonik, Ltd.)
PA1010 resin particles: Polyamide 1010 resin particles (trade name: VESTOSINT 9158, average particle size 20 µm, manufactured by Daicel-Evonik, Ltd.)

### <Reinforcing fibers>

### (Examples 1 to 15 and Comparative Examples 1, 2, 4, and 5)

Carbon fiber bundles in which carbon fibers having a tensile modulus of 290 GPa were aligned in one direction were prepared as a reinforcing fiber base material. The basis weights of the prepared reinforcing fiber base materials are shown in Tables 1 to 4.

### <Production of prepreg>

### (Examples 1, 3 to 7, 9, 10, and 13 to 15 and Comparative Examples 2, 4, and 5)

A resin composition thus obtained was applied on a release paper at 80°C, and a resin film having a mass per unit area of 36 g/m² was obtained. Next, the fabric including polyamide fibers was disposed on both surfaces of the reinforcing fiber base material, and at the same time, each of the resin films was laminated on the disposed fabric to produce a prepreg. The conditions for lamination were set to a temperature of 70°C, a pressure of 0.2 MPa, and a rate of feeding out the resin film, the reinforcing fiber base material, and the polyamide fibers to 7 m/min.

### (Example 2)

A prepreg was obtained in the same manner as in Example 1, except that a resin film having a mass per unit area of 28 g/m² was used instead of the resin film having a mass per unit area of 36 g/m².

### (Examples 8, 11, and 12)

Prepregs were obtained in the same manner as in Example 1, except that a resin film having a mass per unit area of 23 g/m² was used instead of the resin film having a mass per unit area of 36 g/m².

### (Comparative Example 1)

A prepreg was obtained in the same manner as in Example 1, except that a fabric including polyamide fibers was not disposed on the surface of the reinforcing fiber base material.

### (Comparative Example 5)

The first and second resin compositions thus obtained were respectively applied on a release paper at 70°C to 100°C, and a first resin film of 18 g/m² and a second resin film of 25 g/m² were obtained. The obtained first resin film was supplied from above and from below the reinforcing fiber base material to impregnate the reinforcing fiber base material in between the fibers, and a carbon fiber layer was formed. The conditions employed at the time of impregnating the fibers with the first resin film were set to an impregnation temperature of 70°C, a pressure of 0.2 MPa, and a rate of feeding out the reinforcing fiber base material and the first resin film of 3 m/min. Subsequently, the second resin film was laminated from above and from below the carbon fiber layer to form surface layers, and a prepreg was produced. The conditions employed at the time of laminating the second resin film from above and from below the carbon fiber layer were set to a temperature of 70°C, a pressure of 0.2 MPa, and a rate of feeding out the carbon fiber layer and the second resin film to 7 m/min.

The content percentage of the reinforcing fibers in the obtained prepreg is shown in Table 1 to Table 4.

The proportion occupied by the mass of the polyamide fibers in the total mass of the component (A), component (B), component (C), and polyamide fibers in the obtained prepreg is shown in Table 1 to Table 4. In the Table 1 to Table 4, the abbreviation "PA content" is used.

### <Measurement of melting points of polyamide resin and polyamide resin particles>

A first polyamide resin, a second polyamide resin, first polyamide resin particles, and second polyamide resin particles were heated from 25°C at a rate of 10°C/min using a differential scanning calorimeter (DSC), and the temperatures at the top of the obtained endotherm peaks were defined as the melting points of the polyamide resins and the polyamide resin particles. The melting point of the polyamide 12 resin was 176°C, the melting point of the polyamide 1010 resin was 199°C, the melting point of the polyamide 6 resin was 225°C, the melting point of a resin formed from a polyamide 6/12 copolymer (random copolymer) obtained by copolymerizing caprolactam and laurolactam at a molar ratio of 20 : 80 was 160°C, the melting point of a resin formed from a polyamide 6/12 copolymer (random copolymer) obtained by copolymerizing caprolactam and laurolactam at a molar ratio of 80 : 20 was 194°C, the melting point of the polyamide 12 resin particles was 176°C, and the melting point of the polyamide 1010 resin particles was 199°C.

### <Measurement of fusion temperature of polyamide resin in surface fiber layer>

The first polyamide resin and the second polyamide resin were heated from 25°C at a rate of 10°C/min in the surface fiber layer using a differential scanning calorimeter (DSC), and the temperatures at the top of the obtained endotherm peaks were measured as the fusion temperature of the first polyamide resin and the fusion temperature of the second polyamide resin in the surface fiber layer. The results are shown in Tables 1 to 3.

### <Measurement of maximum opening area of fabric>

The area of the largest opening of a fabric observed within a 7×5 mm field of view of an optical microscope was defined as the maximum opening area of the fabric. The results are shown in Tables 1 to 3.

### <Measurement of average opening area of fabric>

The average value of area of any ten openings in a fabric observed within a 7×5 mm field of view of an optical microscope was defined as the average opening area of the fabric. The results are shown in Tables 1 to 3.

### <Measurement of CAI strength>

### (Examples 1, 3 to 7, 9, 10, and 13 to 15 and Comparative Examples 1 to 4)

Thirty-two plies (layers) of each of the obtained prepregs were pseudo-isotropically laminated in the [+45°/0°/-45°/90°]₄ₛ configuration, the temperature was raised from room temperature to 185°C at a rate of 2.0°C/min at a pressure of 0.6 MPa in an autoclave, subsequently the laminate was heated and cured for 2 hours at the same temperature, and a fiber-reinforced composite material was obtained. For this fiber-reinforced composite material, a sample having a size of 150 mm in length × 100 mm in width was cut out according to ASTM D7136 and D7137, a falling weight impact of 6.7 J/mm was applied at the center of the sample, and the CAI strength was determined. The measurement such as described above was performed six times respectively using different samples, and the average value of the CAI strengths determined from the six measurements was evaluated according to the following evaluation criteria. The results are shown in Tables 5 to 7. A sample rated as A or B was considered acceptable.
A: The average value is 300 MPa or more.
B: The average value is 250 MPa or more and less than 300 MPa.
C: The average value is less than 250 MPa.

### (Example 2)

A fiber-reinforced composite material was obtained in the same manner as in Example 1, except that 40 plies (layers) of the prepreg were pseudo-isotropically laminated in the [+45°/0°/-45°/90°]₅ₛ configuration, and measurement of the CAI strength was carried out.

### (Examples 8, 11, and 12)

A fiber-reinforced composite material was obtained in the same manner as in Example 1, except that 56 plies (layers) of the prepreg were pseudo-isotropically laminated in the [+45°/0°/-45°/90°]₇ₛ configuration, and measurement of the CAI strength was carried out.

### <Calculation of coefficient of variation of CAI strength>

The coefficient of variation of the CAI strength was determined from the six measured values of the CAI strength measured by the above-described method. The coefficient of variation is a value obtained by dividing the standard deviation of the CAI strength determined from the six measurements by the average value of the CAI strength. As this coefficient of variation is larger, it is implied that the CAI strength of the obtained fiber-reinforced composite material has large variation. The results are shown in Tables 5 to 7. A sample with a coefficient of variation of the CAI strength of less than 6.0 was considered acceptable.

### <Measurement of damaged area>

The damaged area was measured by a non-destructive inspection using ultrasonic flaw detection. The impact energy used at the time of measurement was 6.7 J/m². The measurement such as described above was performed six times respectively using different samples, and the average value of the damaged area determined from the six measurements was evaluated according to the following evaluation criteria. The results are shown in Tables 5 to 7. A sample rated as A or B was considered acceptable.
A: The average value is less than 700 mm².
B: The average value is 700 mm² or more and less than 1500 mm².
C: The average value is 1500 mm² or more.

### <Calculation of coefficient of variation of damaged area>

The coefficient of variation of the damaged area was determined from six measured values of the damaged area measured by the above-described method. The coefficient of variation is a value obtained by dividing the standard deviation of the damaged area determined from the six measurements by the average value of the damaged area. As this coefficient of variation is larger, it is implied that the damaged area of the obtained fiber-reinforced composite material has large variation. The results are shown in Tables 5 to 7.

### <Measurement of mode I interlaminar fracture toughness test (G1c)>

### (Examples 1, 3 to 7, 9, 10, and 13 to 15 and Comparative Examples 1, 2, 4, and 5)

26 plies of the obtained prepreg were laminated such that the directions of the carbon fibers were aligned in the same direction, and a KAPTON film (1 mil) (manufactured by DuPont-Toray Co., Ltd.) was inserted into some region between central layers (between the 13^{th} layer and the 14^{th} layer) so that pre-cracks would be introduced on the side surface of the laminate perpendicular to the direction of the carbon fibers. 1 mil represents 1/1000 inches, that is, 25.3995 µm. This was heated from room temperature to 185°C at a rate of temperature increase of 1.0°C/min at a pressure of 0.6 MPa in an autoclave and then was heated and cured for 2 hours at the same temperature, and a fiber-reinforced composite material was obtained. For this fiber-reinforced composite material, a sample having a size of 254.0 mm in length (fiber direction) × 25.4 mm in width was cut out, and a specimen having a hinge adhered to an end was obtained. This specimen was subjected to a double cantilever beam test according to ASTM D5528 at a loading rate of 1.0 mm/min, and G1c was determined. The measurement such as described above was performed six times respectively using different samples, and the average value of G1c determined from the six measurements was evaluated according to the following evaluation criteria. The results are shown in Tables 5 to 7. A sample rated as A or B was considered acceptable.
A: The average value is 450 J/m² or more.
B: The average value is 400 J/m² or more and less than 450 J/m².
C: The average value is less than 400 J/m².

### (Example 2)

Measurement of the mode I interlaminar fracture toughness test (G1c) was carried out in the same manner as in Example 1, except that 34 plies of the obtained prepreg were laminated such that the directions of the carbon fibers were aligned in the same direction, and a KAPTON film was inserted into some region between central layers (between the 17^{th} layer and the 18^{th} layer).

### (Examples 8, 11, and 12)

Measurement of the mode I interlaminar fracture toughness test (G1c) was carried out in the same manner as in Example 1, except that 44 plies of the obtained prepreg were laminated such that the directions of the carbon fibers were aligned in the same direction, and a KAPTON film was inserted into some region between central layers (between the 22^{nd} layer and the 23^{rd} layer).

### <Calculation of coefficient of variation of mode I interlaminar fracture toughness test (G1c)>

The coefficient of variation of G1c was determined from six measurement values of G1c measured by the above-described method. The coefficient of variation is a value obtained by dividing the standard deviation of G1c determined from the six measurements by the average value of G1c. As this coefficient of variation is larger, it is implied that the G1c of the obtained fiber-reinforced composite material varies widely. The results are shown in Tables 5 to 7.

### <Measurement of mode II interlaminar fracture toughness test (G2c)>

### (Examples 1, 3 to 7, 9, 10, and 13 to 15 and Comparative Examples 1, 2, 4, and 5)

26 plies of the obtained prepreg were laminated such that the directions of the carbon fibers were aligned in the same direction, and a KAPTON film (1 mil) (manufactured by DuPont-Toray Co., Ltd.) was inserted into some region between central layers (between the 13^{th} layer and the 14^{th} layer) so that pre-cracks would be introduced on the side surface of the laminate perpendicular to the direction of the carbon fibers. 1 mil represents 1/1000 inches, that is, 25.3995 µm. This was heated from room temperature to 185°C at a rate of temperature increase of 1.0°C/min at a pressure of 0.6 MPa in an autoclave and then was heated and cured for 2 hours at the same temperature, and a fiber-reinforced composite material was obtained. For this fiber-reinforced composite material, a sample having a size of 254.0 mm in length (fiber direction) × 25.4 mm in width was cut out, and a specimen having a hinge adhered to an end was obtained. This specimen was subjected to an end face nick-bend test according to Composite Materials Handbook 17-1 at a loading rate of 1.0 mm/min, and G2c was determined. The measurement such as described above was performed six times respectively using different samples, and the average value of G2c determined from the six measurements was evaluated according to the following evaluation criteria. The results are shown in Tables 5 to 7. A sample rated as A or B was considered acceptable.
A: The average value is 2100 J/m² or more.
B: The average value is 1000 J/m² or more and less than 2100 J/m².
C: The average value is less than 1000 J/m².

### (Example 2)

Measurement of the mode II interlaminar fracture toughness test (G2c) was carried out in the same manner as in Example 1, except that 34 plies of the obtained prepreg were laminated such that the directions of the carbon fibers were aligned in the same direction, and a KAPTON film was inserted into some region between central layers (between the 17^{th} layer and the 18^{th} layer).

### (Examples 8, 11, and 12)

Measurement of the mode II interlaminar fracture toughness test (G2c) was carried out in the same manner as in Example 1, except that 44 plies of the obtained prepreg were laminated such that the directions of the carbon fibers were aligned in the same direction, and a KAPTON film was inserted into some region between central layers (between the 22^{nd} layer and the 23^{rd} layer).

### <Calculation of coefficient of variation of mode II interlaminar fracture toughness test (G2c)>

The coefficient of variation of G2c was determined from six measurement values of G2c measured by the above-described method. The coefficient of variation is a value obtained by dividing the standard deviation of G2c determined from the six measurements by the average value of G2c. As this coefficient of variation is larger, it is implied that the G2c of the obtained fiber-reinforced composite material varies widely. The results are shown in Tables 5 to 7.

### <Measurement of interlaminar shear strength (ILSS)>

### (Examples 1, 3 to 7, 9, 10, and 13 to 15 and Comparative Examples 1, 2, 4, and 5)

26 plies of the obtained prepreg were laminated such that the directions of the carbon fibers were aligned in the same direction, this laminate was heated from room temperature to 185°C at a rate of temperature increase of 1.0°C/min at a pressure of 0.6 MPa in an autoclave and then heated and cured for 2 hours at the same temperature, and a fiber-reinforced composite material was obtained. For this fiber-reinforced composite material, a sample having a size of 24.0 mm in length (fiber direction) × 8.0 mm in width was cut out, and a specimen was obtained. This specimen was subjected to a short beam shear test according to ASTM D2344 at a loading rate of 1.0 mm/min, and the interlaminar shear strength (ILSS) was measured. The measurement such as described above was performed six times using different samples, and the average value of the ILSS determined from the six measurements was evaluated according to the following evaluation criteria. The results are shown in Tables 5 to 7. A sample rated as A or B was considered acceptable.
A: The average value is 100 MPa or more.
B: The average value is 90 MPa or more and less than 100 MPa.
C: The average value is less than 90 MPa.

### (Example 2)

Measurement of the interlaminar shear strength (ILSS) was carried out in the same manner as in Example 1, except that 34 plies of the obtained prepreg were laminated such that the directions of the carbon fibers were aligned in the same direction.

### (Examples 8, 11, and 12)

Measurement of the interlaminar shear strength (ILSS) was carried out in the same manner as in Example 1, except that 44 plies of the obtained prepreg were laminated such that the directions of the carbon fibers were aligned in the same direction.

### <Calculation of coefficient of variation of interlaminar shear strength (ILSS)>

The coefficient of variation of the ILSS was determined from the six measurement values of the ILSS measured by the above-described method. The coefficient of variation is a value obtained by dividing the standard deviation determined from the six measurements by the average value of the ILSS. As this coefficient of variation is larger, it is implied that the ILSS of the obtained fiber-reinforced composite material varies widely. The results are shown in Tables 5 to 7.

**[Table 1]**

| | Component | Abbreviation | Example 1 | Example 2 | Example 3 | Example 4 | Example 5 | Example 6 | Example 7 |
|---|---|---|---|---|---|---|---|---|---|
| Resin composition | (A) Benzoxazine resin | F-a | 75 | 75 | 60 | 75 | 75 | 75 | 75 |
| | | P-a | - | - | 15 | - | - | - | - |
| | (B) Epoxy resin | 2021P | 25 | 25 | 25 | 25 | 25 | 25 | 25 |
| | (C) Curing agent | BPF | 10 | 10 | 10 | 10 | 10 | 10 | 10 |
| | (D) Toughness improver | YP70 | 5 | 5 | 5 | 5 | 5 | 5 | 5 |
| Fabric | Type of fabric | | Knitted fabric | Knitted fabric | Knitted fabric | Woven fabric | Knitted fabric | Knitted fabric | Knitted fabric |
| | First polyamide resin | | PA12 | PA12 | PA12 | PA12 | PA12 | PA12 | PA12 |
| | Second polyamide resin | | PA1010 | PA1010 | PA6 | PA1010 | PA1010 | PA1010 | PA1010 |
| | Melting point difference (°C) between first polyamide resin and second polyamide resin | | 23 | 23 | 49 | 23 | 23 | 23 | 23 |
| | Fusion temperature (°C) of first polyamide resin | | 167 | 167 | 167 | 167 | 167 | 167 | 167 |
| | Fusion temperature (°C) of second polyamide resin | | 183 | 183 | 200 | 183 | 183 | 183 | 183 |
| | Basis weight (g/m²) | | 5.5 | 3.9 | 6.0 | 5.5 | 5.8 | 5.5 | 5.4 |
| | Structure | | Core-sheath structure | Core-sheath structure | Core-sheath structure | Core-sheath structure | Single fiber | Core-sheath structure | Core-sheath structure |
| | Content proportions of first polyamide resin and second polyamide resin (mass ratio) First polyamide resin : second polyamide resin | | 50 : 50 | 50 : 50 | 50 : 50 | 50 : 50 | 50 : 50 | 75 : 25 | 25 : 75 |
| | Maximum opening area (mm²) | | 0.40 | 0.73 | 0.68 | 0.30 | 1.13 | 0.43 | 0.41 |
| | Average opening area (mm²) | | 0.14 | 0.36 | 0.32 | 0.25 | 0.55 | 0.16 | 0.15 |
| | Elongation percentage (%) in one direction | | 34 | 27 | 31 | 7 | 19 | 36 | 28 |
| | Fiber diameter (µm) | | 37 | 37 | 34 | 37 | 25 | 38 | 37 |
| Reinforcing fibers | Basis weight (g/m²) | | 150 | 115 | 150 | 150 | 150 | 150 | 150 |
| Content percentage (mass%) of reinforcing fibers in prepreg | | | 64.1 | 64.4 | 66.0 | 64.5 | 64.2 | 64.6 | 64.4 |
| PA content (mass%) | | | 12 | 12 | 12 | 12 | 12 | 12 | 12 |
| Curing temperature (°C) of resin composition included in surface fiber layer | | | 185 | 185 | 185 | 185 | 185 | 185 | 185 |

**[Table 2]**

| | Component | Abbreviation | Example 8 | Example 9 | Example 10 | Example 11 | Example 12 | Example 13 | Example 14 |
|---|---|---|---|---|---|---|---|---|---|
| Resin composition | (A) Benzoxazine resin | F-a | 75 | 75 | 75 | 75 | 75 | 75 | 75 |
| | | P-a | - | - | - | - | - | - | - |
| | (B) Epoxy resin | 2021P | 25 | 25 | 25 | 25 | 25 | 25 | 25 |
| | (C) Curing agent | BPF | 10 | 10 | 10 | 10 | 10 | 10 | 10 |
| | (D) Toughness improver | YP70 | 5 | 5 | 5 | 5 | 5 | 5 | 5 |
| Fabric | Type of fabric | | Knitted fabric | Knitted fabric | Knitted fabric | Knitted fabric | Woven fabric | Knitted fabric | Knitted fabric |
| | First polyamide resin | | PA12 | PA12 | PA12 | PA12 | PA12 | PA12 | PA1010 |
| | Second polyamide resin | | PA1010 | PA1010 | PA1010 | PA1010 | PA1010 | PA1010 | PA6 |
| | Melting point difference (°C) between first polyamide resin and second polyamide resin | | 23 | 23 | 23 | 23 | 23 | 23 | 26 |
| | Fusion temperature (°C) of first polyamide resin | | 167 | 167 | 167 | 167 | 167 | 167 | 183 |
| | Fusion temperature (°C) of second polyamide resin | | 183 | 183 | 183 | 183 | 183 | 183 | 200 |
| | Basis weight (g/m²) | | 2.4 | 16.5 | 20.1 | 2.0 | 2.7 | 5.4 | 5.5 |
| | Structure | | Core-sheath structure | Core-sheath structure | Core-sheath structure | Core-sheath structure | Core-sheath structure | Core-sheath structure | Core-sheath structure |
| | Content proportions of first polyamide resin and second polyamide resin (mass ratio) First polyamide resin : second polyamide resin | | 50 : 50 | 50 : 50 | 50 : 50 | 50 : 50 | 50 : 50 | 50 : 50 | 50:50 |
| | Maximum opening area (mm²) | | 1.36 | 0.22 | 0.17 | 3.60 | 1.22 | 0.44 | 0.42 |
| | Average opening area (mm²) | | 0.62 | 0.09 | 0.07 | 1.72 | 0.54 | 0.16 | 0.15 |
| | Elongation percentage (%) in one direction | | 11 | 33 | 36 | 7 | 4 | 118 | 31 |
| | Fiber diameter (µm) | | 37 | 38 | 38 | 37 | 36 | 37 | 37 |
| Reinforcing fibers | Basis weight (g/m²) | | 90 | 150 | 150 | 90 | 90 | 150 | 150 |
| Content percentage (mass%) of reinforcing fibers in prepreg | | | 65.0 | 64.5 | 64.1 | 64.5 | 64.6 | 64.5 | 64.5 |
| PA content (mass%) | | | 11 | 40 | 48 | 8.1 | 11 | 12 | 12 |
| Curing temperature (°C) of resin composition included in surface fiber layer | | | 185 | 185 | 185 | 185 | 185 | 185 | 185 |

**[Table 3]**

| | Component | Abbreviation | Example 15 | Comparative Example 1 | Comparative Example 2 | Comparative Example 3 | Comparative Example 4 |
|---|---|---|---|---|---|---|---|
| Resin composition | (A) Benzoxazine resin | F-a | 75 | 60 | 75 | - | 75 |
| | | P-a | - | 15 | - | - | - |
| | (B) Epoxy resin | 2021P | 25 | 25 | - | - | 25 |
| | (C) Curing agent | BPF | 10 | 10 | 10 | - | 10 |
| | (D) Toughness improver | YP70 | 5 | 5 | 0 | - | 5 |
| Fabric | Type of fabric | | Knitted fabric | None | Knitted fabric | Knitted fabric | Knitted fabric |
| | First polyamide resin | | PA6/PA12 (20/80) | - | PA12 | PA6/PA12 (80/20) | PA6/PA12 (20/80) |
| | Second polyamide resin | | PA12 | - | PA1010 | PA1010 | PA6 |
| | Melting point difference (°C) between first polyamide resin and second polyamide resin | | 16 | - | 23 | 5 | 65 |
| | Fusion temperature (°C) of first polyamide resin | | 141 | - | 167 | 180 | 141 |
| | Fusion temperature (°C) of second polyamide resin | | 167 | - | 183 | 183 | 200 |
| | Basis weight (g/m²) | | 5.6 | - | 5.4 | - | 5.4 |
| | Structure | | Core-sheath structure | | Core-sheath structure | Single fiber | Core-sheath structure |
| | Content proportions of first polyamide resin and second polyamide resin (mass ratio) First polyamide resin : second polyamide resin | | 50 : 50 | - | 50 : 50 | 50 : 50 | 50 : 50 |
| | Maximum opening area (mm²) | | 0.41 | - | 0.40 | - | 0.42 |
| | Average opening area (mm²) | | 0.14 | - | 0.14 | - | 0.15 |
| | Elongation percentage (%) in one direction | | 33 | - | 34 | - | 30 |
| | Fiber diameter (µm) | | 36 | - | 36 | 25 | 36 |
| Reinforcing fibers | Basis weight (g/m²) | | 150 | 150 | 150 | - | 150 |
| Content percentage (mass%) of reinforcing fibers in prepreg | | | 64.3 | 64.2 | 64.6 | - | 64.6 |
| PA content (mass%) | | | 12 | 0 | 12 | - | 12 |
| Curing temperature (°C) of resin composition included in surface fiber layer | | | 185 | 185 | 185 | - | 185 |

**[Table 4]**

| | Component | Abbreviation | Comparative Example 5 | |
|---|---|---|---|---|
| | | | First | Second |
| Resin composition | (A) Benzoxazine resin | F-a | 60 | 60 |
| | | P-a | 15 | 15 |
| | (B) Epoxy resin | 2021P | 25 | 25 |
| | (C) Curing agent | BPF | 10 | 10 |
| | (D) Toughness improver | YP70 | 5 | 5 |
| | First polyamide resin particles | PA12 resin particles | - | 14.5 |
| | Second polyamide resin particles | PA1010 resin particles | - | 14.5 |
| Particles | Melting point difference (°C) between first polyamide resin particles and second polyamide resin particles | | 23 | |
| | Content proportions of first polyamide resin particles and second polyamide resin particles (mass ratio) First polyamide resin particles : second polyamide resin particles | | 50 : 50 | |
| Reinforcing fibers | Basis weight (g/m²) | | 150 | |
| Content percentage (mass%) of reinforcing fibers in prepreg | | | 64.0 | |
| PA content (mass%) | | | 12 | |

**[Table 5]**

| | | Example 1 | Example 2 | Example 3 | Example 4 | Example 5 | Example 6 | Example 7 | Example 8 |
|---|---|---|---|---|---|---|---|---|---|
| CAI strength | Rating | A | A | B | A | A | A | B | B |
| | Coefficient of variation (%) | 3.5 | 3.5 | 4.0 | 5.8 | 4.4 | 3.4 | 3.6 | 4.1 |
| Damaged area | Rating | A | A | A | A | A | A | B | B |
| | Coefficient of variation (%) | 6.1 | 5.7 | 5.6 | 7.2 | 6.8 | 4.6 | 5.4 | 6.8 |
| G1c | Rating | A | A | A | A | A | B | A | B |
| | Coefficient of variation (%) | 3.7 | 4.0 | 3.8 | 4.6 | 4.1 | 5.0 | 3.8 | 4.7 |
| G2c | Rating | A | A | B | A | B | A | B | B |
| | Coefficient of variation (%) | 3.0 | 5.9 | 4.5 | 6.1 | 5.7 | 4.1 | 2.9 | 3.8 |
| ILSS | Rating | A | A | A | B | A | B | B | A |
| | Coefficient of variation (%) | 0.9 | 0.9 | 1.0 | 1.1 | 1.1 | 0.8 | 0.9 | 1.2 |

**[Table 6]**

| | | Example 9 | Example 10 | Example 11 | Example 12 | Example 13 | Example 14 | Example 15 |
|---|---|---|---|---|---|---|---|---|
| CAI strength | Rating | A | A | B | A | A | B | A |
| | Coefficient of variation (%) | 3.0 | 3.3 | 4.5 | 6.4 | 3.6 | 4.2 | 3.5 |
| Damaged area | Rating | A | A | B | A | A | B | A |
| | Coefficient of variation (%) | 5.2 | 4.9 | 6.1 | 7.4 | 6.6 | 6.6 | 5.3 |
| G1c | Rating | B | B | B | B | A | A | B |
| | Coefficient of variation (%) | 4.4 | 4.6 | 4.1 | 5.8 | 4.1 | 4.1 | 4.2 |
| G2c | Rating | A | A | B | A | A | B | A |
| | Coefficient of variation (%) | 3.4 | 3.9 | 3.3 | 4.8 | 3.5 | 3.3 | 4.5 |
| ILSS | Rating | B | B | A | A | A | A | A |
| | Coefficient of variation (%) | 1.2 | 1.0 | 0.9 | 1.3 | 1.0 | 1.1 | 0.8 |

**[Table 7]**

| | | Comparative Example 1 | Comparative Example 2 | Comparative Example 4 | Comparative Example 5 |
|---|---|---|---|---|---|
| CAI strength | Rating | C | C | C | A |
| | Coefficient of variation (%) | 6.3 | 7.1 | 6.8 | 6.7 |
| Damaged area | Rating | C | B | C | A |
| | Coefficient of variation (%) | 4.3 | 6.8 | 5.9 | 6.6 |
| G1c | Rating | A | A | B | A |
| | Coefficient of variation (%) | 4.8 | 5.7 | 5.1 | 4.5 |
| G2c | Rating | C | B | B | B |
| | Coefficient of variation (%) | 5.6 | 7.2 | 6.5 | 6.7 |
| ILSS | Rating | A | B | B | B |
| | Coefficient of variation (%) | 1.0 | 1.3 | 1.1 | 1.6 |

As shown in Table 5 and Table 6, it was verified that in the fiber-reinforced composite materials obtained in Examples 1 to 15, in which the surface fiber layer includes polyamide fibers including two specific kinds of polyamide resins, decreases in the CAI strength and the variation in the CAI strength were simultaneously achieved at a high level. Furthermore, it was verified that in the fiber-reinforced composite materials obtained in Examples 1 to 15, the ILSS and the interlaminar fracture toughness were achieved at a high level, the damaged area after impact application was decreased, and the decrease in these variations can be promoted.

When a comparison was made between Example 1 and Example 2 in Table 5, it was verified that even in a case where the basis weight of the reinforcing fibers was adjusted to 115 g/m², decreases in the CAI strength and the variation in the CAI strength were achieved at a high level, similarly to the case where the basis weight of the reinforcing fibers was adjusted to 150 g/m². Furthermore, it was verified that even in a case where the basis weight of the reinforcing fibers was adjusted to 115 g/m², the obtained fiber-reinforced composite material could achieve the ILSS and the interlaminar fracture toughness at a high level, reduce the damaged area after impact application, and promote reduction of these variations.

When a comparison is made between Examples 1 and 2 of Table 5 and Comparative Example 5 of Table 7, it was verified that in a case where a fabric including polyamide fibers was used, the coefficient of variation of the CAI strength was reduced as compared to the case of using polyamide resin particles as the polyamide resin. For the reason why such results were obtained, the inventors speculate that it is because in a case where a fabric including polyamide fibers is used, the polyamide resin is uniformly distributed in the plane of the prepreg as compared to the case of using polyamide resin particles.

When a comparison is made between Example 1 of Table 5 and Comparative Example 5 of Table 7, it can be seen that in a case where a fabric including polyamide fibers is used, the G2c and ILSS were further enhanced as compared to the case of using polyamide resin particles as the polyamide resin. For the reason why such results were obtained, the inventors speculate that it is because in a case where a fabric including polyamide fibers is used, it is necessary to cut the fibers at the time of interlaminar shearing and at the time of interlaminar fracture.

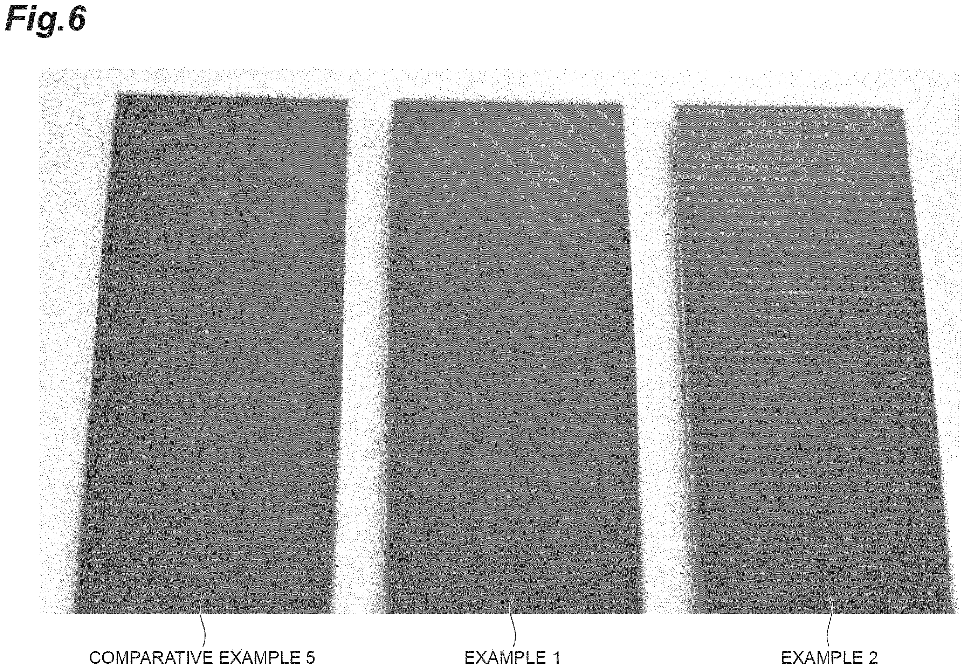

FIG. 6 is photographs of the surfaces of the fiber-reinforced composite materials obtained in Example 1, Example 2, and Comparative Example 5. In Examples 1 and 2, since a fabric including polyamide fibers was used as the polyamide resin, the pattern originating from the fabric can be recognized on the surface. With regard to the use for sports goods, automobile applications, and the like, highly expensive carbon fiber fabric prepregs may be used on the surface in order to impart design properties; however, by using the prepreg of the present invention, a surface having design properties can be obtained even with an inexpensive unidirectional carbon fiber prepreg.

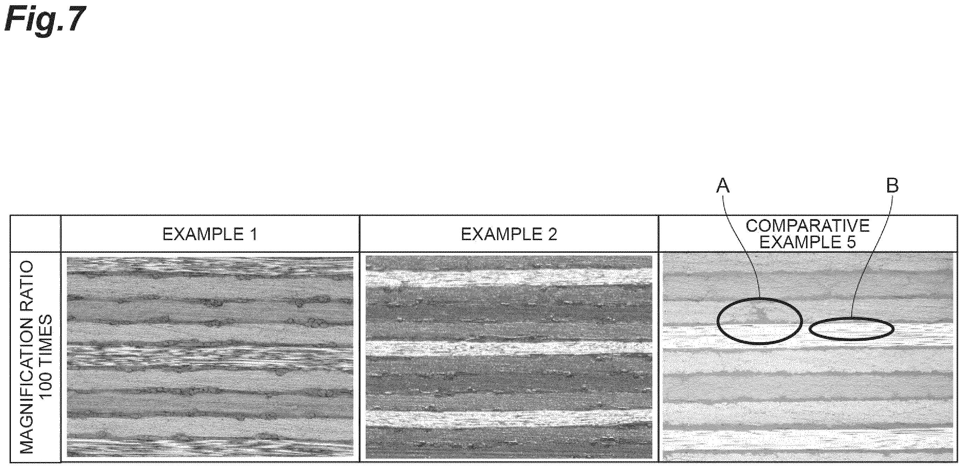

FIG. 7 is photographs of cross-sections of the fiber-reinforced composite materials obtained in Example 1, Example 2, and Comparative Example 5. With regard to the fiber-reinforced composite material obtained in Comparative Example 5, while there were places where polyamide resin particles were densely packed and had excessively infiltrated into the reinforcing fiber layer as shown in FIG. 7(A), there were places where polyamide resin particles were locally not sufficiently present and had not sufficiently infiltrated into the reinforcing fiber layer as shown in FIG. 7(B). In such places where polyamide resin particles were not sufficiently present, there was a risk that crack growth could not be suppressed at the time of impact application and the damaged area would increase, and it is speculated that this caused an increase in the coefficient of variation of the damaged area as well as an increase in the coefficient of variation of the CAI strength. On the other hand, in Examples 1 and 2 that used a fabric including polyamide fibers as the polyamide resin, since the polyamide resin was uniformly distributed in the plane of the prepreg, the coefficients of variation of the damaged area and the CAI strength were suppressed to a low level.

### Industrial Applicability

As described above, according to the present invention, a method for producing a prepreg with which a fiber-reinforced composite material that achieves excellent CAI strength and a reduction of variation in the CAI strength are achieved at a high level at the same time while utilizing a benzoxazine resin having excellent moisture resistance and heat resistance, can be provided. A prepreg obtained by the production method of the present invention and a fiber-reinforced composite material obtained by laminating a plurality of the prepregs of the present invention and heating the laminate under pressure can be suitably utilized for aircraft applications, watercraft applications, automobile applications, sports applications, and other general industrial applications, and are particularly useful for aircraft applications.

### Reference Signs List

1: reinforcing fiber, 2: resin composition, 3: reinforcing fiber layer, 4: fabric, 5: resin composition, 6: surface fiber layer, 8: resin cured product, 10: prepreg, 100: fiber-reinforced composite material, A: site where polyamide resin particles are densely packed and have excessively infiltrated into the reinforcing fiber layer, B: site where polyamide resin particles are not sufficiently present and have not sufficiently infiltrated into the reinforcing fiber layer.

## Claims

1. A method for producing a prepreg, the prepreg having:
a reinforcing fiber layer including reinforcing fibers and a resin composition containing: (A) a benzoxazine resin, (B) an epoxy resin, and (C) a curing agent having two or more phenolic hydroxyl groups in the molecule, the reinforcing fibers being impregnated with the resin composition in between the fibers; and
a surface fiber layer provided on at least one surface of the reinforcing fiber layer and including a fabric including polyamide fibers and a resin composition containing the component (A), the component (B), and the component (C), the polyamide fibers being impregnated with the resin composition in between the fibers,
the method comprising:
a disposition step of disposing the fabric on at least one surface of a reinforcing fiber base material including the reinforcing fibers; and
before or after the disposition step or simultaneously with the disposition step, an impregnation step of supplying a resin composition containing the component (A), the component (B), and the component (C) to the reinforcing fiber base material and impregnating the reinforcing fibers with the resin composition in between the fibers,
wherein the polyamide fibers include a first polyamide resin and a second polyamide resin having a melting point higher than the melting point of the first polyamide resin by 7°C to 50°C.

2. The method for producing a prepreg according to claim 1, wherein the disposition step and the impregnation step are simultaneously carried out by disposing, on at least one surface of the reinforcing fiber base material, the fabric in which the polyamide fibers are impregnated with a resin composition containing the component (A), the component (B), and the component (C) in between the fibers.

3. The method for producing a prepreg according to claim 1 or 2, wherein the polyamide fibers include fibers having a core-sheath structure including a core part including the second polyamide resin; and a sheath part including the first polyamide resin covering the core part.

4. The method for producing a prepreg according to any one of claims 1 to 3, wherein in the polyamide fibers, the content proportions of the first polyamide resin and the second polyamide resin are in the range of the first polyamide resin : the second polyamide resin = 70 : 30 to 30 : 70 at a mass ratio.

5. The method for producing a prepreg according to any one of claims 1 to 4, wherein the fabric is at least one selected from the group consisting of a knitted fabric, a woven fabric, and a nonwoven fabric.

6. The method for producing a prepreg according to any one of claims 1 to 5, wherein the maximum opening area of the fabric is 0.2 to 3 mm².

7. A prepreg comprising:
a reinforcing fiber layer including reinforcing fibers and a resin composition containing (A) a benzoxazine resin, (B) an epoxy resin, and (C) a curing agent having two or more phenolic hydroxyl groups in the molecule, the reinforcing fibers being impregnated with the resin composition in between the fibers; and
a surface fiber layer provided on at least one surface of the reinforcing fiber layer and including a fabric including polyamide fibers and a resin composition containing the component (A), the component (B), and the component (C), the polyamide fibers being impregnated with the resin composition in between the fibers,
wherein the polyamide fibers include a first polyamide resin and a second polyamide resin having a melting point higher than the melting point of the first polyamide resin by 7°C to 50°C.

8. The prepreg according to claim 7, wherein the polyamide fibers include fibers having a core-sheath structure including: a core part including the second polyamide resin; and a sheath part covering the core part and including the first polyamide resin.

9. The prepreg according to claim 7 or 8, wherein in the polyamide fibers, the content proportions of the first polyamide resin and the second polyamide resin are in the range of the first polyamide resin : the second polyamide resin = 70 : 30 to 30 : 70 at a mass ratio.

10. The prepreg according to any one of claims 7 to 9, wherein the fabric is at least one selected from the group consisting of a knitted fabric, a woven fabric, and a nonwoven fabric.

11. The prepreg according to any one of claims 7 to 10, wherein the maximum opening area of the fabric is 0.2 to 3 mm².
